# EUROPÄISCHE PATENTSCHRIFT

(11) **EP 2 216 842 B1**
(45) Veröffentlichungstag und Bekanntmachung des Hinweises auf die Patenterteilung: **12.10.2011**
(21) Anmeldenummer: 09012869.5
(22) Anmeldetag: 12.10.2009
(51) Int. Cl.: H01M 2/02, H01M 10/50

(54) **Galvanische Zelle mit Umhüllung**
Galvanic cell with casing
Cellule galvanique dotée d'une enveloppe

(30) Priorität: 21.01.2009 DE 102009005498
(43) Veröffentlichungstag der Anmeldung: 11.08.2010
(73) Patentinhaber: Li-Tec Battery GmbH, 01917 Kamenz (DE)
(72) Erfinder:
(74) Vertreter: Schlotter, Alexander Carolus Paul

(56) Entgegenhaltungen:
- EP-A1- 0 391 020
- US-A1- 2002 061 436
- US-A1- 2005 255 379

## Beschreibung

Die vorliegende Erfindung betrifft eine galvanische Zelle für eine Batterie. Die Erfindung wird im Zusammenhang mit Lithium-Ionen-Batterien zur Versorgung von KFZ-Antrieben beschrieben. Es wird darauf hingewiesen, dass die Erfindung auch unabhängig von der Chemie, der Bauart der galvanischen Zelle oder unabhängig von der Art des versorgten Antriebs Verwendung finden kann.

Aus dem Stand der Technik sind Batterien mit mehreren galvanischen Zellen zur Versorgung von KFZ-Antrieben bekannt. Während des Betriebs einer derartigen Batterie treten in den galvanischen Zellen auch unumkehrbare chemische Reaktionen auf. Diese unumkehrbaren Reaktionen führen zu einer verringerten Ladekapazität der galvanischen Zellen.

Der Erfindung liegt die Aufgabe zugrunde, die Ladekapazität der galvanischen Zellen einer Batterie über eine höhere Zahl von Ladezyklen zu erhalten. Das wird erfindungsgemäß durch die Gegenstände der unabhängigen Ansprüche erreicht. Zu bevorzugende Weiterbildungen der Erfindung sind Gegenstand der Unteransprüche.

Eine erfindungsgemäße galvanische Zelle, mit insbesondere einer im Wesentlichen prismatischen oder zylindrischen Gestalt, weist einen Elektrodenstapel auf. Weiter weist die galvanische Zelle wenigstens einen Stromableiter auf, welcher mit dem Elektrodenstapel verbunden ist. Ferner weist die galvanische Zelle eine Umhüllung auf, welche den Elektrodenstapel wenigstens teilweise umschließt.

Der wenigstens eine Stromableiter erstreckt sich dabei teilweise aus der Umhüllung. Die Umhüllung weist wenigstens ein erstes Formteil und ein zweites Formteil auf. Ein Formteil weist eine höhere Wärmeleitfähigkeit auf, als die übrigen Formteile. Die Formteile der Umhüllung sind vorgesehen, den Elektrodenstapel wenigstens teilweise zu umschließen.

Unter einer galvanischen Zelle ist vorliegend eine Vorrichtung zu verstehen, welche auch der Abgabe von elektrischer Energie dient. Die galvanische Zelle speichert die Energie in chemischer Form. Vor Abgabe eines elektrischen Stroms wird die chemische Energie in elektrische Energie gewandelt. Unter Umständen ist die galvanische Zelle auch geeignet, elektrische Energie aufzunehmen, in chemische Energie zu wandeln und abzuspeichern. Man spricht dann von einer wiederaufladbaren galvanischen Zelle. Die Wandlung von elektrischer in chemische Energie oder umgekehrt ist verlustbehaftet und begleitet von unumkehrbaren chemischen Reaktionen. Die unumkehrbaren chemischen Reaktionen führen dazu, dass Bereiche der galvanischen Zelle zur Energiespeicherung und Energiewandlung nicht mehr zur Verfügung stehen. So nimmt die Speicherfähigkeit oder auch Ladekapazität der galvanischen Zelle mit zunehmender Anzahl von Entlade- und Ladevorgängen bzw. Ladezyklen ab. Auch mit zunehmender Betriebstemperatur einer galvanischen Zelle nehmen die unumkehrbaren chemischen Reaktionen zu. Die Gestalt einer galvanischen Zelle kann abhängig vom verfügbaren Raum am Einsatzort gewählt werden. Bevorzugt ist die Gestalt der galvanischen Zelle im Wesentlichen zylindrisch oder prismatisch.

Vorliegend ist unter einem Elektrodenstapel die Anordnung wenigstens zweier Elektroden und einem dazwischen angeordneten Elektrolyt zu verstehen. Der Elektrolyt kann teilweise von einem Separator aufgenommen sein. Dann trennt der Separator die Elektroden. Der Elektrodenstapel dient auch zum Abspeichern chemischer Energie und zu deren Wandlung in elektrische Energie. Im Fall einer wiederaufladbaren galvanischen Zelle ist der Elektrodenstapel auch zur Wandlung von elektrischer in chemische Energie in der Lage. Beispielsweise sind die Elektroden plattenförmig oder folienartig ausgebildet. Der Elektrodenstapel kann aufgewickelt sein und eine im Wesentlichen zylindrische Gestalt aufweisen. Man spricht dann eher von einem Elektrodenwickel. Nachfolgend wird der Begriff Elektrodenstapel auch für Elektrodenwickel verwendet. Der Elektrodenstapel kann Lithium oder ein anderes Alkalimetall auch in ionischer Form aufweisen.

Vorliegend ist unter einem Stromableiter eine Einrichtung zu verstehen, welche auch den Fluss von Elektronen aus einer Elektrode in Richtung eines elektrischen Verbrauchers ermöglicht. Der Stromableiter wirkt auch in entgegengesetzter Stromrichtung. Ein Stromableiter ist elektrisch mit einer Elektrode bzw. einer aktiven Elektrodenmasse des Elektrodenstapels und weiter mit einem Anschlusskabel verbunden. Die Gestalt des Stromableiters ist an die Gestalt der galvanischen Zelle bzw. des Elektrodenstapels angepasst. Vorzugsweise ist ein Stromableiter plattenförmig oder folienartig ausgebildet. Bevorzugt weist jede Elektrode des Elektrodenstapels einen eigenen Stromableiter auf bzw. Elektroden gleicher Polarität sind mit einem gemeinsamen Stromableiter verbunden.

Vorliegend ist unter der Umhüllung eine Einrichtung zu verstehen, welche auch den Austritt von Chemikalien aus dem Elektrodenstapel in die Umgebung verhindert. Weiter kann die Umhüllung die chemischen Bestandteile des Elektrodenstapels vor unerwünschter Wechselwirkung mit der Umgebung schützen. Beispielsweise schützt die Umhüllung den Elektrodenstapel vor dem Zutritt von Wasser oder Wasserdampf aus der Umgebung. Die Umhüllung kann folienartig ausgebildet sein. Die Umhüllung soll den Durchtritt von Wärmeenergie möglichst wenig beeinträchtigen. Vorliegend weist die Umhüllung wenigstens zwei Formteile auf. Vorzugsweise schmiegen sich die Formteile wenigstens teilweise an einen Elektrodenstapel an.

Vorliegend ist unter einem Formteil ein Festkörper zu verstehen, welcher an die Gestalt des Elektrodenstapels angepasst ist. Unter Umständen gewinnt ein Formteil erst in Zusammenwirkung mit einem weiteren Formteil oder dem Elektrodenstapel seine Form. Im Fall eines quaderförmigen Elektrodenstapels können die Formteile im Wesentlichen rechteckig zugeschnitten sein. Dabei sind einige Abmessungen des Formteils vorzugsweise größer als bestimmte Abmessungen des Elektrodenstapels gewählt. Wenn zwei Formteile um den Elektrodenstapel gelegt werden, so ragen die Formteile teilweise über den Elektrodenstapel hinaus und bilden teilweise einen überstehenden Rand. Ein Randbereich eines Formteiles berührt dabei vorzugsweise einen Randbereich eines weiteren Formteils, vorzugsweise flächig. Beispielsweise ist ein Formteil als ebene Platte ausgebildet, während ein weiteres Formteil sich um den Elektrodenstapel an das erste Formteil schmiegt.
Ein Formteil für Elektrodenwickel ist bevorzugt zylindrisch ausgebildet, wobei die Krümmung wenigstens eines Formteils einer zylindrischen Umhüllung an den Radius eines Elektrodenwickels angepasst ist.
Ein Formteil weist eine höhere Wärmeleitfähigkeit als die übrigen Formteile auf und berührt den Elektrodenstapel teilweise und wärmeleitend. Abhängig von einem Temperaturunterschied zwischen dem Formteil und dem Elektrodenstapel wird Wärmeenergie aus dem Elektrodenstapel heraus oder in diesen Elektrodenstapel hinein übertragen.

Vorliegend ist unter Umschließen zu verstehen, dass ein Formteil bereichsweise in Berührung mit einem zweiten Formteil gebracht werden kann. Dabei kommt der Elektrodenstapel zwischen den beteiligten Formteilen zu liegen. Die wenigstens zwei Formteile berühren sich bereichsweise flächig, vorzugsweise wenigstens entlang einer begrenzenden Kante bzw. eines Randbereichs eines beteiligten Formteils.

Zur Versorgung eines KFZ-Antriebs werden der Batterie zeitweise hohe elektrische Ströme entnommen, welche zu einer merklichen Erwärmung der galvanischen Zellen einer Batterie führen können. Mit steigender Temperatur nehmen in einer galvanischen Zelle auch unumkehrbare chemische Reaktionen zu. Erfindungsgemäß wird die Umhüllung der galvanischen Zelle mit einem Formteil ausgebildet, welches sich gegenüber den übrigen Teilen der Umhüllung durch eine merklich erhöhte Wärmeleitfähigkeit auszeichnet. So kann der thermische Widerstand verringert und der Wärmestrom in den Elektrodenstapel oder aus dem Elektrodenstapel erhöht werden. So kann eine Heizleistung in einer galvanischen Zelle bei geringerem Temperaturunterschied abgeführt werden.
Mit der Begrenzung der Betriebstemperatur einer galvanischen Zelle werden unumkehrbare chemische Reaktionen verringert, die Ladekapazitäten der galvanischen Zellen über eine höhere Anzahl von Ladezyklen erhalten und die zugrunde liegende Aufgabe gelöst.

Nachfolgend werden zu bevorzugende Weiterbildungen der Erfindung beschrieben.

Vorteilhaft sind wenigstens zwei Formteile der Umhüllung vorgesehen, miteinander verbunden zu werden. Die Verbindung erfolgt beispielsweise kraftschlüssig oder vorzugsweise stoffschlüssig. Abhängig von den Werkstoffen der verschiedenen Formteile werden diese beispielsweise durch Kleben oder ein Schweißverfahren miteinander verbunden. Insbesondere das Ultraschallschweißen kann zur Verbindung eines metallischen Formteils mit einem thermoplastischen Formteil Anwendung finden. Dabei ist möglicherweise eine Vorbehandlung bzw. Aktivierung wenigstens einer der Oberflächen eines beteiligten Formteils dienlich. Eine kraft- oder stoffschlüssige Verbindung verbindet die Formteile derart, dass vorzugsweise eine umlaufende streifenförmige Verbindung den Raum zwischen den Formteilen gegenüber der Umgebung abdichtet. Zur Haftverbesserung können auch eingelegte Streifen Anwendung finden, beispielsweise ein Siegelband. Vorzugsweise werden wenigstens zwei Formteile in einem ersten Verbindungsbereich insbesondere stoffschlüssig miteinander verbunden. Dieser erste Verbindungsbereich verläuft vorzugsweise entlang eines Randbereichs eines beteiligten Formteils. Der erste Verbindungsbereich ist dabei streifenförmig ausgebildet. Es ist nicht erforderlich, dass der erste Verbindungsbereich gänzlich entlang der begrenzenden Kanten des Formteils umläuft. Vor der Verbindung der beteiligten Formteile können weitere Einlegeteile so angeordnet werden, dass diese ebenfalls mit den Formteilen kraft- oder stoffschlüssig verbunden werden. Insbesondere werden die Stromableiter so eingelegt, dass sich diese teilweise aus der Umhüllung erstrecken. So ist die Umhüllung auch in den Bereichen der Stromableiter gasdicht gegenüber der Umgebung.

Vorteilhaft weist wenigstens ein Formteil der Umhüllung einen Wärmeübergangsbereich auf. Dieser Wärmeübergangsbereich dient auch der Verbesserung der Wärmeübertragung in den Elektrodenstapel hinein oder aus diesem heraus. Vorzugsweise ist der Wärmeübergangsbereich von einem ersten Temperiermittel angeströmt und/oder ist in wärmeleitender Berührung mit einem Temperierelement. Ein Wärmeübergangsbereich eines Formteils kann auch einen überwiegenden Teil der Oberfläche des Formteils bedecken. Der Wärmeübergangsbereich kann gleichzeitig zur Befestigung der galvanischen Zelle an einem Temperierelement dienen, beispielsweise durch Schrauben, Nieten, Kleben oder Schweißen.

Vorzugsweise ist wenigstens ein Formteil der Umhüllung biegesteif ausgeführt. Dieses Formteil kann dem Elektrodenstapel Halt geben, den Elektrodenstapel vor mechanischer Beschädigung bewahren oder der mechanischen Verbindung der galvanischen Zelle mit einer Aufnahmevorrichtung dienen. Vorzugsweise ist ein biegesteifes Formteil als Metallplatte oder Metallblech ausgebildet. Das Formteil kann beispielsweise durch Sicken, hochgestellte Bereiche oder Rippen versteift sein.
Vorzugsweise ist wenigstens ein Formteil der Umhüllung dünnwandig ausgeführt. Vorzugsweise ist die Wandstärke eines dünnwandigen Formteils an eine mechanische, elektrische oder thermische Beanspruchung angepasst. Dabei muss die Wandstärke nicht gleichförmig sein. Ein Bereich eines dünnwandigen Formteils mit erhöhter Wandstärke kann als Wärmesenke oder Wärmereservoir wirken und so dazu beitragen, dass Wärmeenergie aus dem Elektrodenstapel abgeführt oder in diesen transportiert wird. Auch spart die dünnwandige Ausbildung eines Formteils Gewicht und Platz. Vorzugsweise ist wenigstens ein Formteil als Folie, besonders bevorzugt als Verbundfolie, ausgebildet. Als Werkstoffe für die Verbundfolie kommen auch Metalle oder Kunststoffe in Frage.

Vorzugsweise weist wenigstens ein Formteil der Umhüllung wenigstens bereichsweise eine Beschichtung auf. Diese Beschichtung dient auch zur Anpassung an Beanspruchungen, denen das Formteil ausgesetzt ist. Beispielsweise dient die Beschichtung zur elektrischen Isolation, zum Schutz des Formteils gegen die Chemikalien der galvanischen Zelle, zur Haftverbesserung für eine Klebeverbindung, zur Verbesserung der Wärmeleitfähigkeit oder zum Schutz gegen schädigende Einwirkungen aus der Umgebung. Eine Beschichtung kann eine chemische Aktivierung der Oberfläche des Formteils bewirken. Eine Beschichtung weist vorzugsweise einen Werkstoff auf, der von dem Werkstoff des Formteils abweicht. Das wenigstens eine Formteil kann auch mehrere verschiedene Beschichtungen aufweisen, welche auch an unterschiedlichen Orten des Formteils angeordnet sein können. Wenn ein Formteil in elektrischem Kontakt mit dem Elektrodenstapel steht, dann ist ein Stromableiter gegenüber diesem Formteil bevorzugt elektrisch isoliert.

Vorteilhaft weist wenigstens ein Formteil der Umhüllung eine Ausnehmung auf, insbesondere eine Schale. Mit dieser Gestaltung gewinnt das Formteil auch ein erhöhtes Flächenträgheitsmoment bzw. Biegesteifigkeit. Vorzugsweise nimmt diese Ausnehmung den Elektrodenstapel wenigstens teilweise auf. Das dient auch dem Schutz des Elektrodenstapels. Die Wandstärke eines Formteils mit Ausnehmung ist vorzugsweise an die Beanspruchung angepasst. Mehrere Formteile der Umhüllung können Ausnehmungen aufweisen, welche gemeinsam einen Raum zur Aufnahme des Elektrodenstapels bilden. Vorzugsweise ist ein Formteil als tiefgezogenes oder kaltfließgepresstes Metallblech ausgebildet. Vorzugsweise ist ein Formteil als tiefgezogene Kunststoffplatte oder Kunststofffolie ausgebildet. Ein Formteil der Umhüllung mit einer Ausnehmung weist zusätzlich wenigstens einen ersten Verbindungsbereich auf, der zum Verbinden mit einem weiteren Formteil vorgesehen ist.
Im Fall einer zylindrischen galvanischen Zelle bzw. Eletrodenwickels ist wenigstens ein Formteil vorzugsweise schalenförmig ausgebildet. Dabei ist die Krümmung des schalenförmigen Formteils an den Radius des Elektrodenwickels angepasst.

Vorteilhaft weist wenigstens ein Formteil einen zweiten Verbindungsbereich auf. Der zweite Verbindungsbereich dient auch der Befestigung der galvanischen Zelle beispielsweise in einem Gehäuse, in einem Rahmen oder auf einer Grundplatte. Vorzugsweise ist ein zweiter Verbindungsbereich derart ausgebildet, dass die Verbindung des betreffenden Formteils mit einem weiteren Körper nur in vorbestimmter Weise erfolgen kann.
Beispielsweise weist ein zweiter Verbindungsbereich eine geometrische Gestalt auf, welche einem Bereich eines weiteren Körpers entspricht.
Vorzugsweise kann mittels einer Anordnung von Formelementen, beispielsweise Löcher und Zapfen, eine Verbindung zwischen dem Formteil und dem weiteren Körper nur in vorbestimmter Weise möglich sein. Auch kann die Anordnung von Durchgangslöchern oder Gewinden eine Verbindung nur in vorbestimmter Weise gestatten. Vorzugsweise ist ein zweiter Verbindungsbereich räumlich getrennt von einem ersten Verbindungsbereich. Wenigstens ein Formteil der Umhüllung weist vorzugsweise mehrere getrennte zweite Verbindungsbereiche auf. Die Verbindung des Formteils mit einem anderen Körper erfolgt beispielsweise mittels Nieten, Schrauben, Schweißen oder Kleben. Vorzugsweise fallen ein zweiter Verbindungsbereich eines Formteils und ein Wärmeübergangsbereich desselben Formteils zusammen. In diesen Bereichen ist das Formteil mit beispielsweise mit einem Temperierelement, einem Rahmen oder mit einer Grundplatte des Batteriegehäuses verbunden.

Vorteilhaft werden wenigstens zwei galvanische Zellen zu einer Batterie gruppiert. Dabei werden die wenigstens zwei galvanischen Zellen bevorzugt parallel zueinander angeordnet. Prismatische oder quaderförmige Zellen werden bevorzugt flächig miteinander in Berührung gebracht und können ein im Wesentlichen quaderförmiges Paket bilden.
Zylindrische Zellen werden bevorzugt so angeordnet, dass deren Längs- bzw. Symmetrieachsen parallel verlaufen oder zusammenfallen. Die Umhüllung für Elektrodenwickel ist bevorzugt zylindrisch ausgebildet, wobei die Krümmung wenigstens eines Formteils einer zylindrischen Umhüllung an den Radius eines Elektrodenwickels angepasst ist.

Weiter ist der Batterie wenigstens ein Temperierelement zugeordnet. Das Temperierelement weist eine vorbestimmte Temperatur auf, welche zeitlich veränderlich sein kann. Die Temperatur des Temperierelements wird bevorzugt in Abhängigkeit von der Temperatur des Elektrodenstapels einer galvanischen Zelle gewählt. Ein vorbestimmtes Temperaturgefälle verursacht einen Wärmestrom in diesen Elektrodenstapel hinein bzw. aus diesem Elektrodenstapel hinaus. Dabei tauscht das Temperierelement mit einem Elektrodenstapel Wärmeenergie über wenigstens ein Formteil bzw. dessen Wärmeübergangsbereich aus, welcher mit dem Temperierelement in Berührung steht. Auch können die vorhandenen galvanischen Zellen insbesondere kraft- oder stoffschlüssig über einen zweiten Verbindungsbereich mit dem Temperierelement verbunden sein.

Vorteilhaft weist das Temperierelement wenigstens einen ersten Kanal auch zur Einstellung einer vorgegebenen Temperatur des Temperierelements auf. Vorzugsweise ist dieser Kanal mit einem zweiten Temperiermittel gefüllt. Besonders bevorzugt durchströmt ein zweites Temperiermittel diesen wenigstens einen Kanal. Dabei führt das strömende zweite Temperiermittel dem Temperierelement Wärmeenergie zu oder führt Wärmeenergie ab. Das wenigstens eine Temperierelement ist vorzugsweise mit einem Wärmetauscher wirkverbunden. Der Wärmetauscher führt Wärmeenergie aus diesem Temperierelement ab oder führt diesem Temperierelement Wärmeenergie zu, insbesondere mittels des zweiten Temperiermittels. Der Wärmetauscher bzw. das Temperiermittel können auch mit der Klimaanlage eines Kraftfahrzeugs wechselwirken. Der Wärmetauscher kann eine elektrische Heizeinrichtung aufweisen.

Vorteilhaft wird eine Batterie mit wenigstens zwei galvanischen Zellen so betrieben, dass wenigstens ein Formteil einer galvanischen Zelle von einem ersten Temperiermittel angeströmt wird. Beispielsweise wird als erstes Temperiermittel Umgebungsluft oder ein Kältemittel der Klimaanlage des KFZ verwendet. Das erste Temperiermittel kann eine höhere oder geringere Temperatur als das wenigstens eine Formteil, dessen Wärmeübergangsbereich oder als ein Elektrodenstapel aufweisen.

Vorteilhaft wird eine erfindungsgemäße galvanische Zelle so hergestellt, dass zunächst wenigstens zwei Formteile der Umhüllung um einen Elektrodenstapel zusammengelegt werden. Dabei können die Stromableiter der galvanischen Zelle eingelegt werden. Die zwei Formteile werden anschließend insbesondere stoffschlüssig miteinander verbunden, so dass eine insbesondere umlaufende Verbindung von wenigstens zwei Formteilen erzeugt wird. So wird bevorzugt eine gasdichte Umhüllung um den Elektrodenstapel erzeugt.
Anschließend wird wenigstens ein Formteil durch Biegen, insbesondere durch Hochstellen wenigstens eines Bereichs des Formteils in einen verformten Zustand überführt. Vorzugsweise wird der erste Verbindungsbereich wenigstens teilweise abgekantet. Dabei kann sich eine Abmessung des wenigstens einen Formteils verringern. Vorteilhaft bewirken die hochgestellten Bereiche des Formteils einen zusätzlichen mechanischen Schutz des Elektrodenstapels. Vorteilhaft erhöht ein hochgestellter Randbereich das Flächenträgheitsmoment des betreffenden Formteils.

Weitere Vorteile, Merkmale und Anwendungsmöglichkeiten der vorliegenden Erfindung ergeben sich aus der nachfolgenden Beschreibung im Zusammenhang mit den Figuren. Es zeigen:
- Fig. 1: eine perspektivische Ansicht an der galvanischen Zelle des Stands der Technik,
- Fig. 2: eine perspektivische und eine Seitenansicht einer galvanischen Zelle des Stands der Technik mit Kühlblech,
- Fig. 3: eine Explosionsdarstellung einer galvanischen Zelle des Stands der Technik mit Kühlblech,
- Fig. 4: eine perspektivische Ansicht einer galvanischen Zelle mit erfindungs- gemäßem Formteil,
- Fig. 5: eine Explosionsdarstellung einer galvanischen Zelle mit erfindungsge- mäßem Formteil,
- Fig. 6: eine weitere Explosionsdarstellung einer galvanischen Zelle mit erfin- dungsgemäßem Formteil,
- Fig. 7: einen Schnitt und eine Ausschnittsvergrößerung einer galvanischen Zel- le mit erfindungsgemäßem Formteil,
- Fig. 8: eine perspektivische Ansicht eines Zellblocks mit galvanischen Zellen mit erfindungsgemäßem Formteil auf einer Temperierplatte,
- Fig. 9: eine Seitenansicht eines Zellblocks mit galvanischen Zellen mit erfin- dungsgemäßem Formteil auf einer Temperierplatte,
- Fig. 10: eine Seitenansicht eines Zellblocks mit galvanischen Zellen mit erfin- dungsgemäßem Formteil in Berührung mit einem ersten Temperiermit- tel,
- Fig. 11: eine perspektivische Ansicht einer galvanischen Zelle mit erfindungs- gemäßem Formteil und zweiten Verbindungsbereichen,
- Fig. 12: eine Seiten- und Vorderansicht einer galvanischen Zelle mit erfindungs- gemäßem Formteil mit mehreren zweiten Verbindungsbereichen,
- Fig. 13: eine Explosionsdarstellung einer galvanischen Zelle mit erfindungsge- mäßem Formteil mit mehreren zweiten Verbindungsbereichen,
- Fig. 14: zwei perspektivische Ansichten einer galvanischen Zelle mit erfindungs- gemäßem Formteil, welches mittels Blechschrauben an einem Tempe- rierelement befestigt werden kann,
- Fig. 15: eine perspektivische Ansicht eines Zellblocks aus galvanischen Zellen mit erfindungsgemäßem Formteil, welche mittels Blechschrauben an ei- nem Temperierelement befestigt sind,
- Fig. 16: eine Schnittdarstellung eines Zellblocks aus galvanischen Zellen mit erfindungsgemäßem Formteil, welche mittels Blechschrauben an einem Temperierelement befestigt sind,
- Fig. 17: eine perspektivische Ansicht einer galvanischen Zelle mit erfindungs- gemäßem Formteil, welches als Schale ausgeführt ist,
- Fig. 18: eine Explosionsdarstellung einer galvanischen Zelle mit erfindungsge- mäßem Formteil, welches als Schale ausgeführt ist.
- Fig. 19: eine weitere Explosionsdarstellung einer galvanischen Zelle mit erfin- dungsgemäßem Formteil, welches als Schale ausgeführt ist.
- Fig. 20: eine Schnittdarstellung und Ausschnittsvergrößerung einer galvanischen Zelle mit erfindungsgemäßem Formteil, welches als Schale ausgeführt ist.
- Fig. 21: eine perspektivische Ansicht einer galvanischen Zelle mit erfindungs- gemäßem Formteil im Ausgangszustand,
- Fig. 22: eine ausschnittsvergrößerte perspektivische Ansicht einer galvanischen Zelle mit erfindungsgemäßem Formteil im Ausgangszustand,
- Fig. 23: eine Seitenansicht und einen Schnitt durch eine galvanische Zelle mit erfindungsgemäßem Formteil im Ausgangszustand,
- Fig. 24: eine perspektivische Ansicht einer galvanischen Zelle mit erfindungs- gemäßem Formteil im verformten Zustand,
- Fig. 25: eine ausschnittsvergrößerte perspektivische Ansicht einer galvanischen Zelle mit erfindungsgemäßem Formteil im verformten Zustand,
- Fig. 26: eine Seitenansicht und einen Schnitt durch eine galvanische Zelle mit erfindungsgemäßem Formteil im verformten Zustand,
- Fig. 27: eine perspektivische Ansicht einer galvanischen Zelle mit erfindungs- gemäßem Formteil, welches als Schale ausgeführt ist, im verformten Zustand,
- Fig. 28: eine ausschnittsvergrößerte perspektivische Ansicht einer galvanischen Zelle mit erfindungsgemäßem Formteil, welches als Schale ausgeführt ist, im verformten Zustand,
- Fig. 29: eine Seitenansicht und einen Schnitt durch eine galvanische Zelle mit erfindungsgemäßem Formteil, welches als Schale ausgeführt ist, im verformten Zustand und
- Fig. 30: zeigt einen Elektrodenwickel, angeordnet in als Schale ausgebildeten Formteilen.

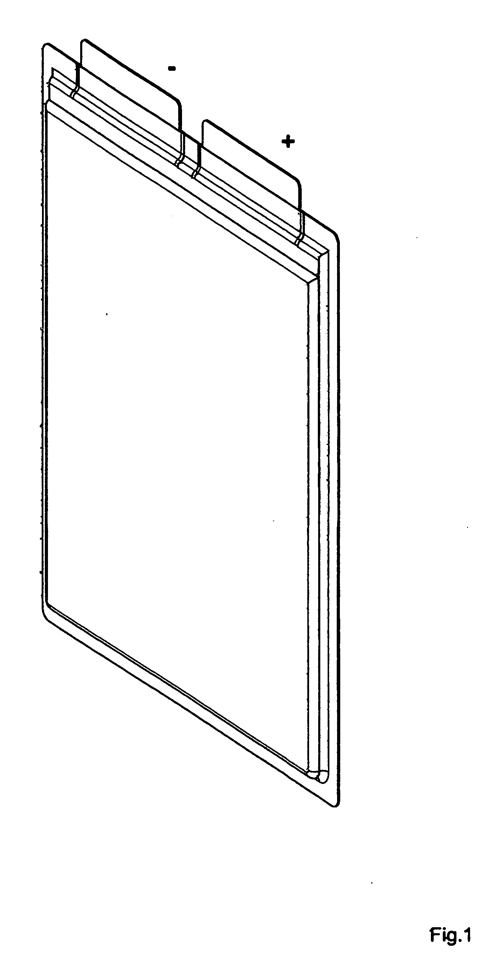

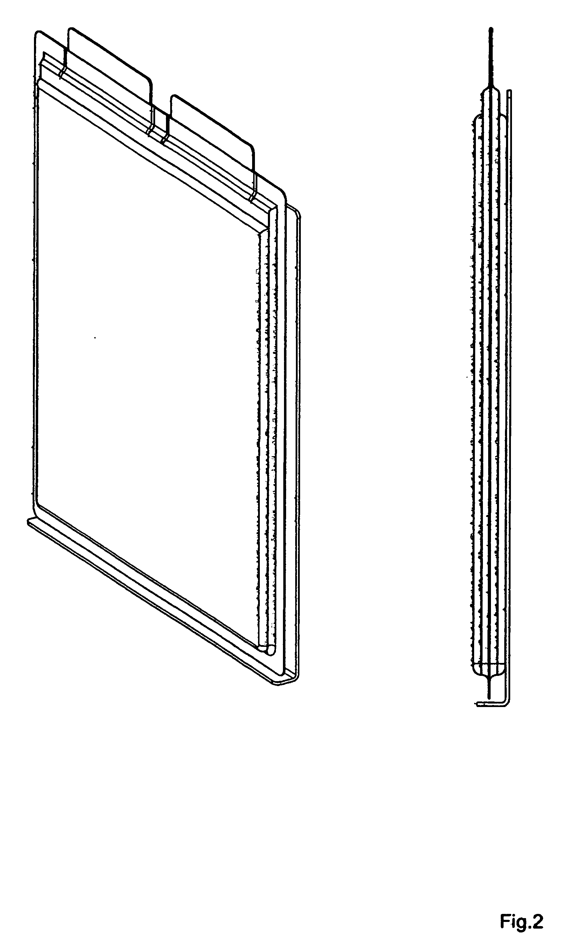

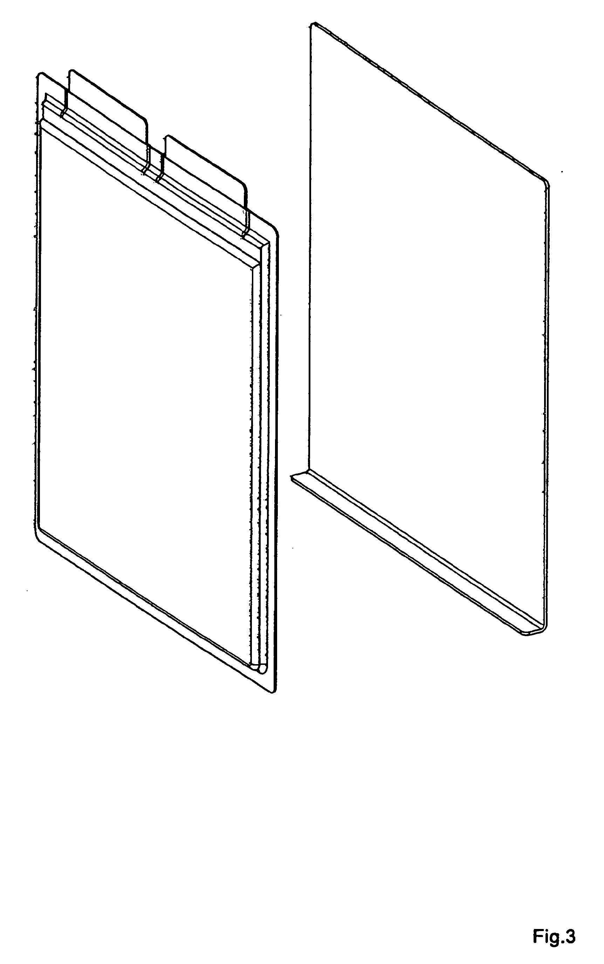

Figur 1 zeigt eine galvanische Zelle aus dem Stand der Technik. Diese weist einen Elektrodenstapel auf, welcher von einer folienartigen Umhüllung gänzlich umgeben ist. Figuren 2 und 3 zeigen eine galvanische Zelle nach dem Stand der Technik, welcher ein Kühlblech zugeordnet ist. Das Kühlblech berührt die Umhüllung der galvanischen Zelle großflächig. Am unteren Ende ist das Kühlblech abgewinkelt.

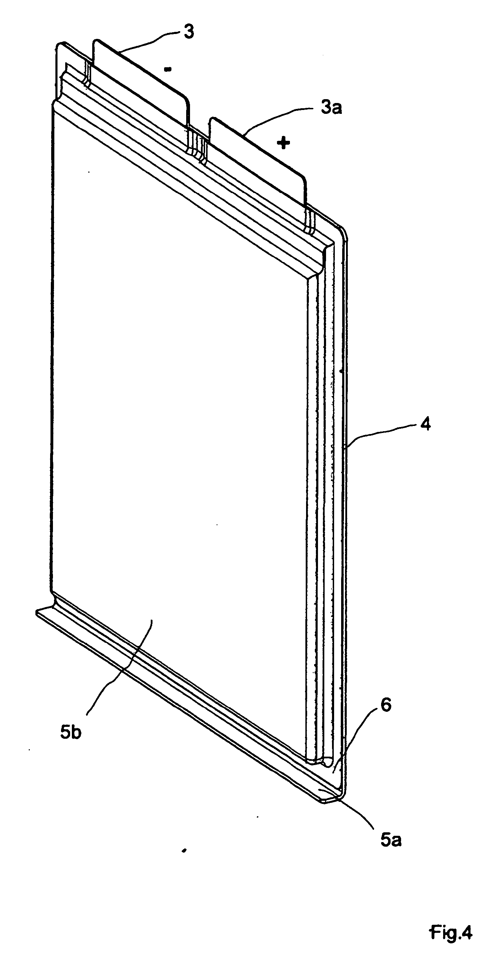

Figur 4 zeigt eine galvanische Zelle 1. Deren Umhüllung 4 weist ein erfindungsgemäßes Formteil 5a auf. Dieses ist entlang einer umlaufenden Siegelnaht mit einer Verbundfolie als zweitem Formteil 5b stoffschlüssig verbunden. Die beiden Stromableiter 3, 3a sind mit den Formteilen 5a, 5b stoffschlüssig verbunden. Der untere Rand eines Formteils 5a ist hochgestellt. Dieser hochgestellte Rand wirkt auch als Wärmeübergangsbereich 7. Der Elektrodenstapel 2 der galvanischen Zelle 1 ist zwischen den Formteilen 5a, 5b der Umhüllung 4 so eingeschlossen, dass der Elektrodenstapel 2 weitgehend gegen Verrutschen gesichert ist. Weiter leistet ein erfindungsgemäßes Formteil 5a auch einen wesentlichen Beitrag zum Wärmeaustausch mit dem Elektrodenstapel 2 und zu dessen Schutz.

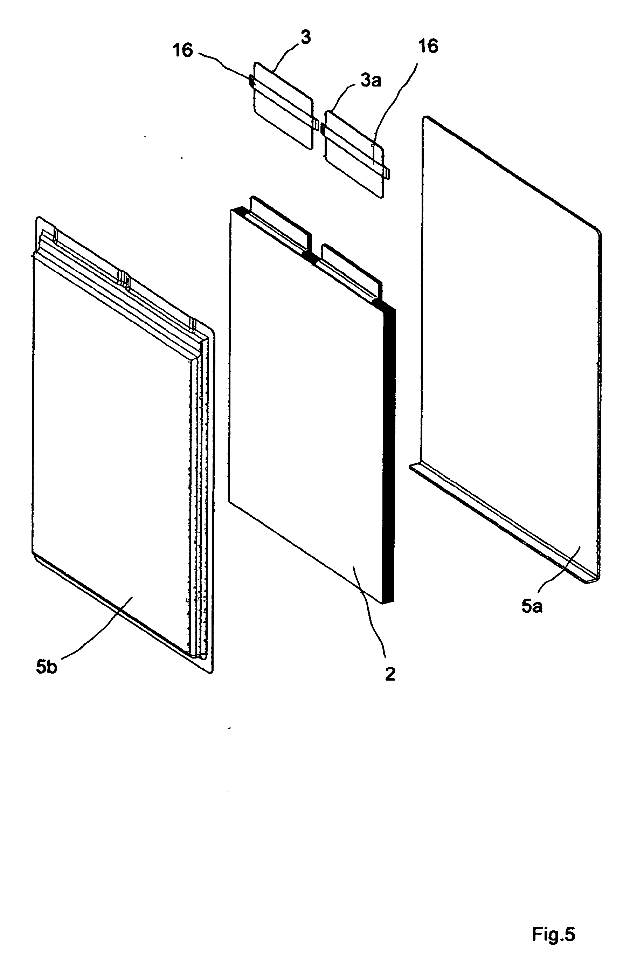

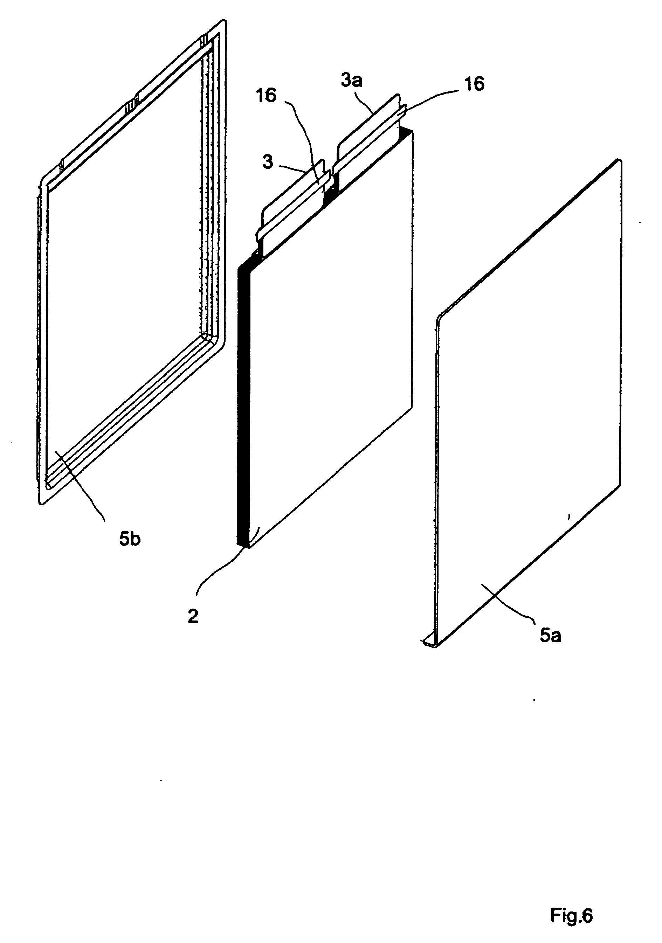

Figuren 5 und 6 zeigen wesentliche Baugruppen der galvanischen Zelle. Ein Formteil 5b ist als Kunststofffolie ausgebildet. Es gewinnt seine Form erst nach dem Umschließen des Elektrodenstapels gemeinsam mit dem zweiten Formteil 5a. Ein Formteil 5b kann insbesondere mittels Tiefziehen formstabil ausgebildet sein. Die beiden Stromableiter 3, 3a sind jeweils mit einem Siegelband 16 versehen. Diese verbessern auch die Abdichtung der Umhüllung 4.

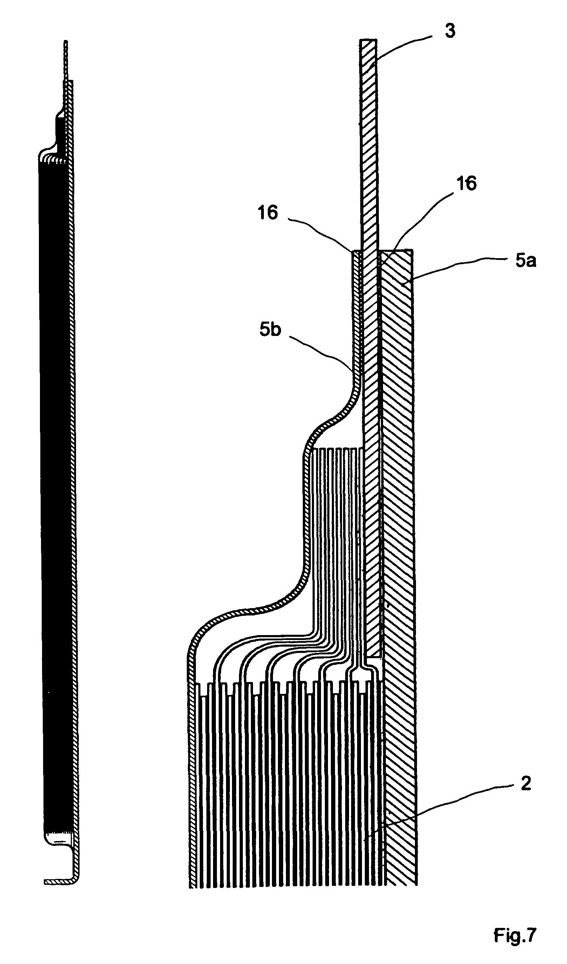

Figur 7 zeigt einen Schnitt durch eine erfindungsgemäße galvanische Zelle 1. Zwei Formteile 5a, 5b, ein Stromableiter 3, 3a und ein Siegelband 16 berühren einander dichtend, insbesondere stoffschlüssig. Weiter ist dargestellt, dass der Elektrodenstapel 2 zahlreiche Elektroden und Separatoren aufweist. Es ist auch gezeigt, dass die Elektroden gleicher Polarität über Anschlussfahnen mit dem Stromableiter 3, 3a vorzugsweise verschweißt sind.

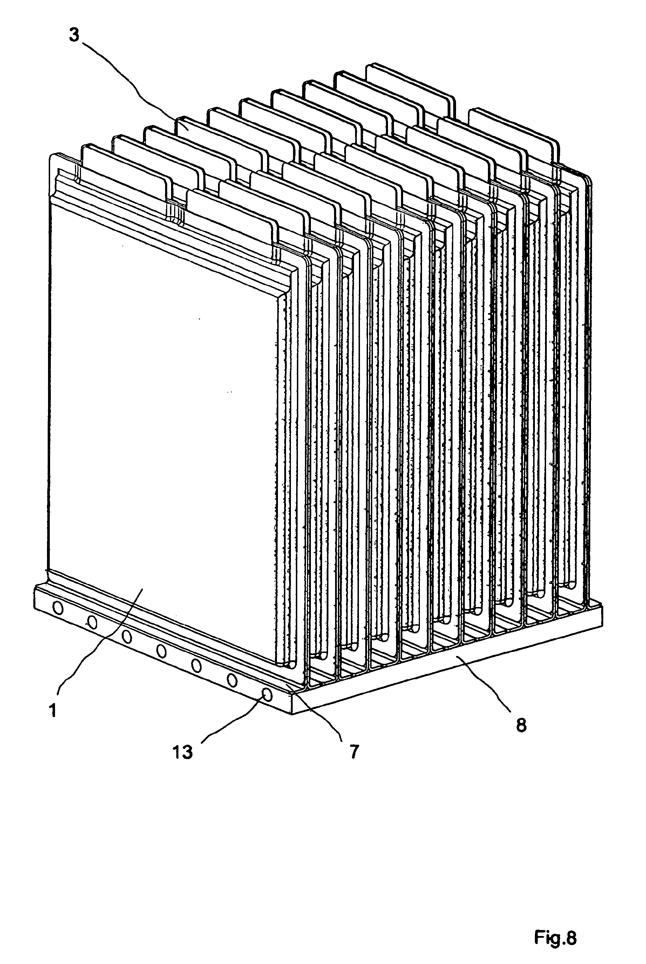

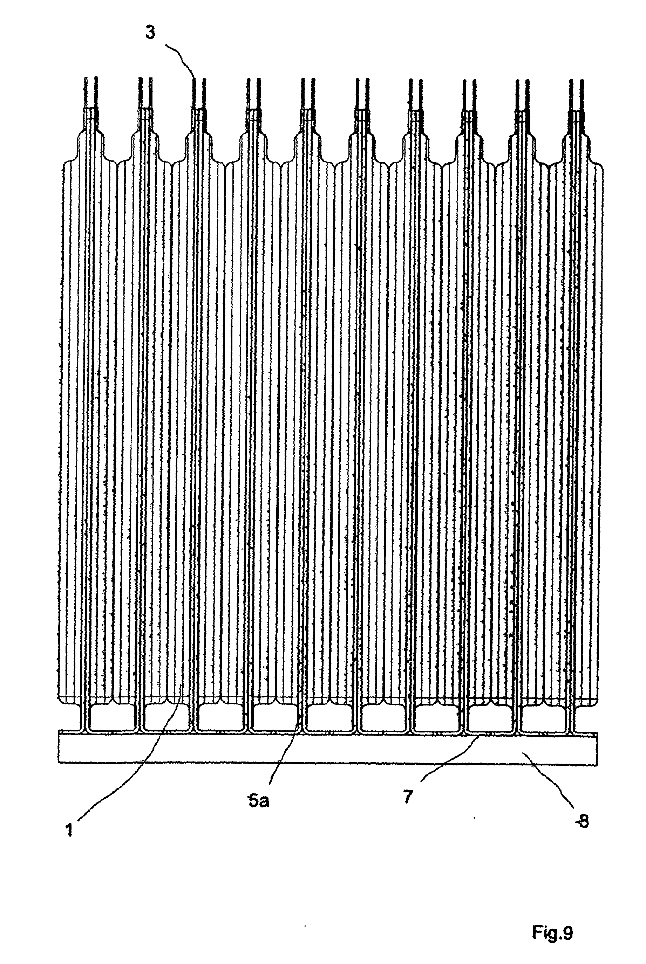

Figuren 8 und 9 zeigen eine Anordnung mehrerer galvanischer Zellen 1 auf einem gemeinsamen Temperierelement 8. Das Temperierelement 8 ist mit mehreren ersten Kanälen 13 für ein zweites Temperiermittel 14 ausgestattet. Jeweils ein Formteil 5a jeder galvanischen Zelle 1 ist als Metallblech ausgebildet. Der untere Rand eines jeden Metallblechs ist hochgestellt und bildet einen Wärmeübergangsbereich 7. Dieser Wärmeübergangsbereich 7 steht wenigstens in wärmeleitendem Kontakt mit dem Temperierelement 8. Die galvanischen ZeHen 1 sind so angeordnet, dass die wärmeleitenden Formteile 5a von jeweils zwei galvanischen Zellen 1 einander berühren.

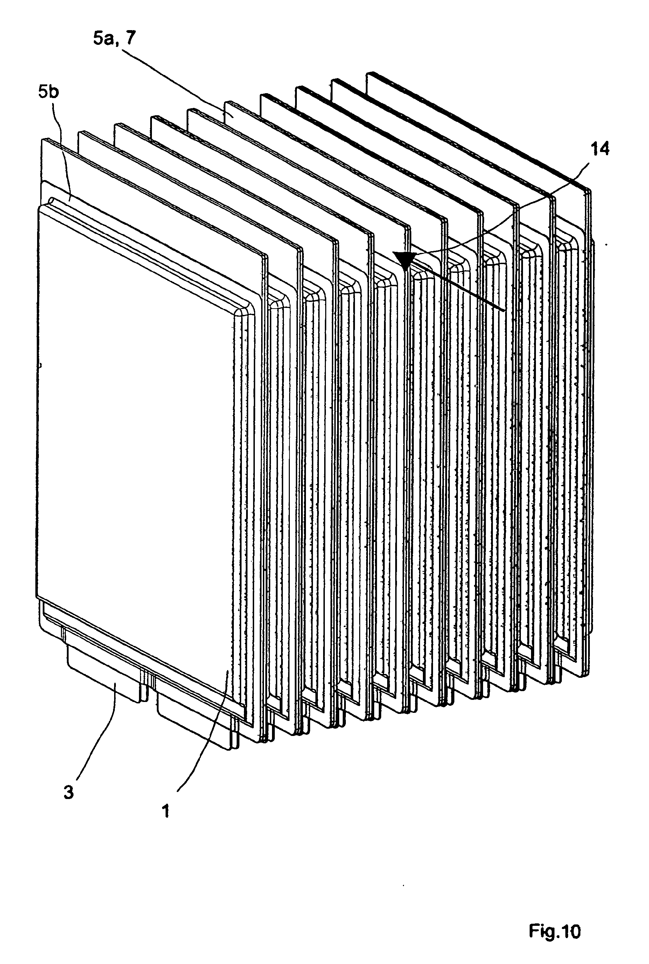

Figur 10 zeigt eine Vielzahl erfindungsgemäßer galvanischer Zellen 1, deren Wärmeübergangsbereiche 7 sich nach oben erstrecken und von einem ersten Temperiermittel 14 angeströmt werden. Auch hier berühren sich je zwei biegesteife und bevorzugt wärmeleitende Formteile 5 der galvanischen Zellen 1.

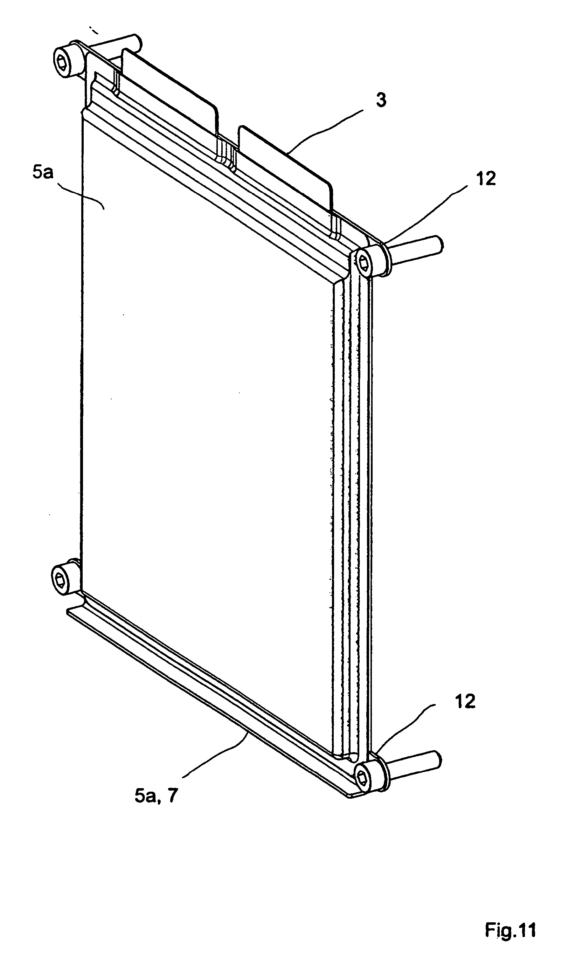

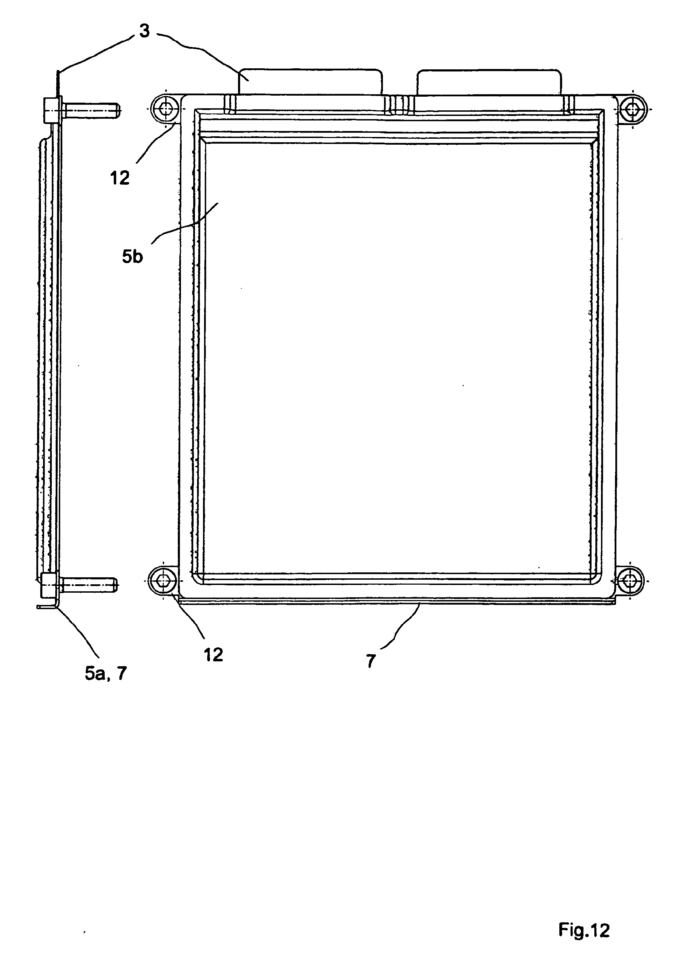

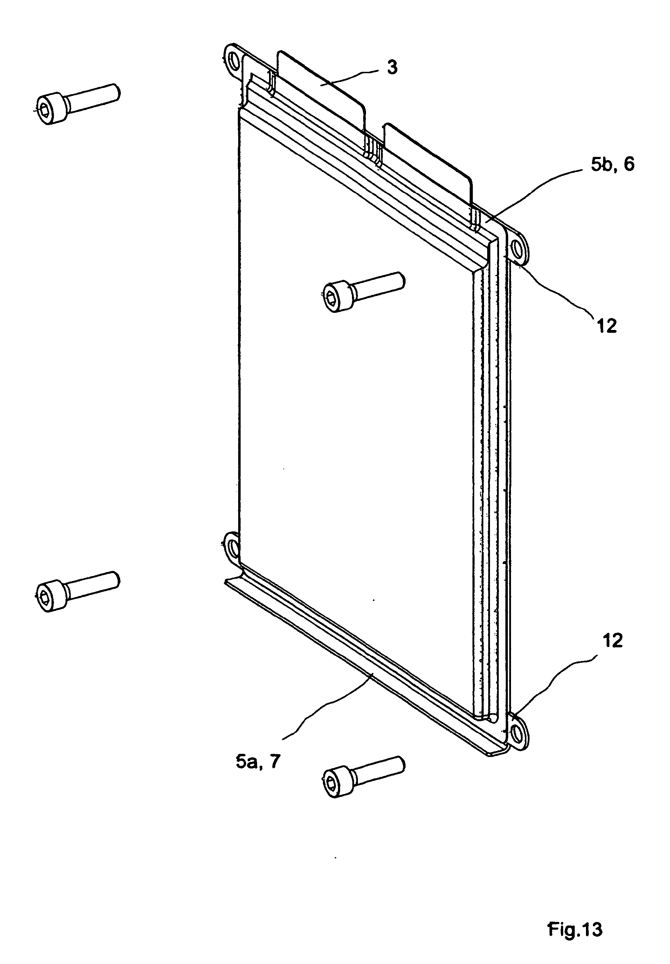

Die Figuren 11 bis 13 zeigen eine erfindungsgemäße galvanische Zelle 1 mit mehreren zweiten Verbindungsbereichen 12. Die zweiten Verbindungsbereiche 12 sind Teil eines Formteils 5b der Umhüllung 4, dessen unterer Rand hochgestellt ist. Der hochgestellte untere Rand dient auch als Wärmeübergangsbereich 7. Die mehreren zweiten Verbindungsbereiche 12 sind als seitlich vorstehende Laschen ausgebildet, welche jeweils ein Durchgangsloch aufweisen. Durch diese Durchgangslöcher werden Spannschrauben geführt, welche in das Batteriegehäuse bzw. dessen Rahmen greifen.

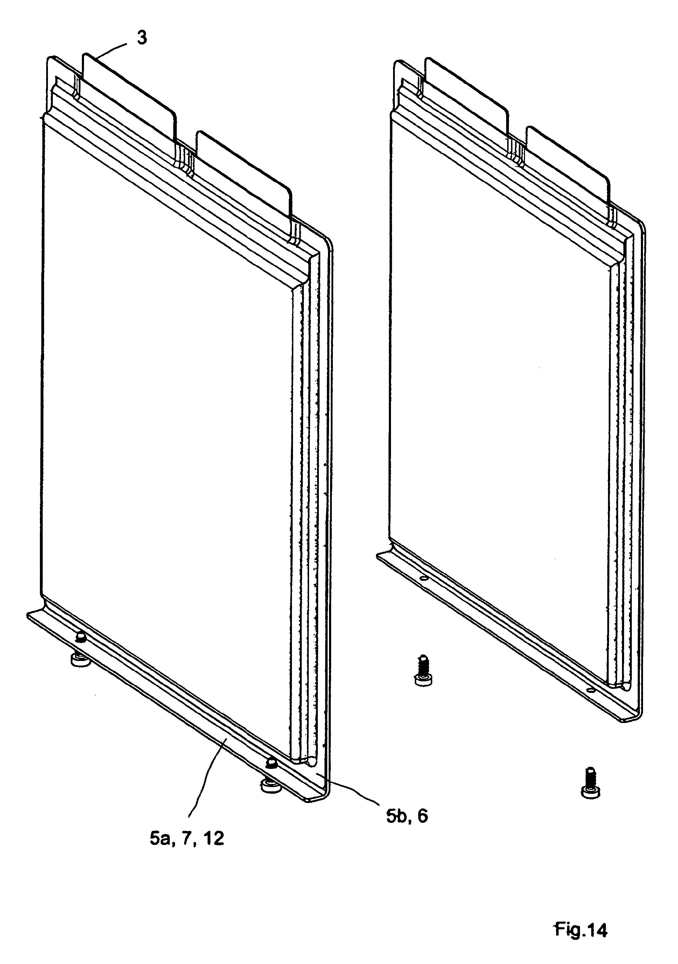

Figur 14 zeigt eine galvanische Zelle 1 deren Umhüllung 4 zwei Formteile 5a, 5b aufweist. Ein Formteil 5a ist als metallblech mit hochgestelltem unteren Rand ausgebildet. Der hochgestellte untere Rand dient als Wärmeübergangsbereich 7 und als zweiter Verbindungsbereich 12. Der hochgestellte untere Rand weist zwei Löcher auf, in welche Blechschrauben eingreifen.

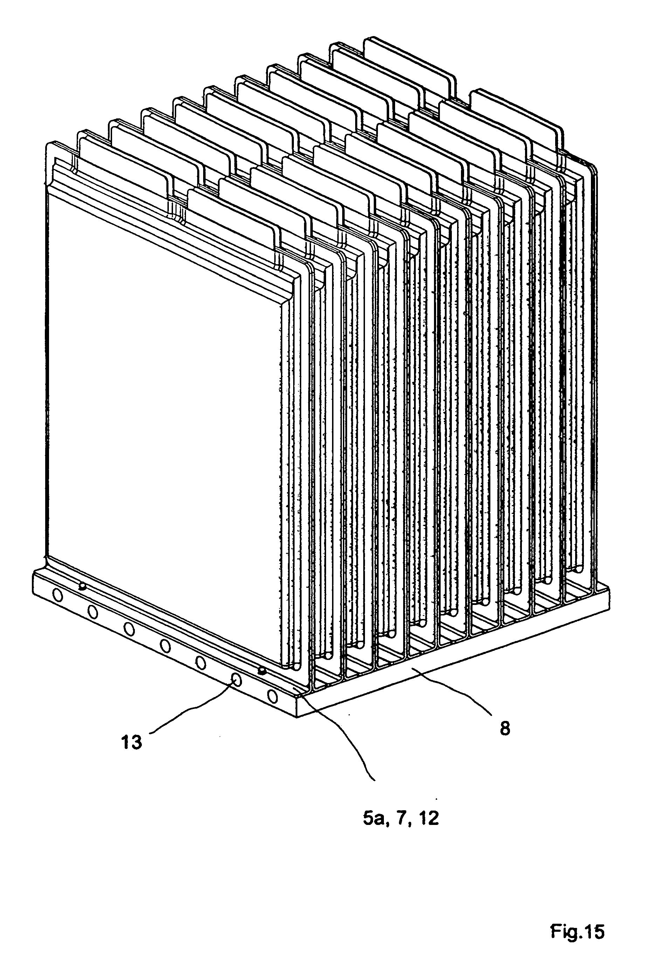

Figur 15 zeigt eine Anzahl von erfindungsgemäßen galvanischen Zellen 1, welche jeweils ein Formteil 5a mit einem hochgestellten unteren Rand als zweitem Verbindungsbereich 12 aufweisen. Die zweiten Verbindungsbereiche 12 sind auf einem Temperierelement 8 verschraubt.

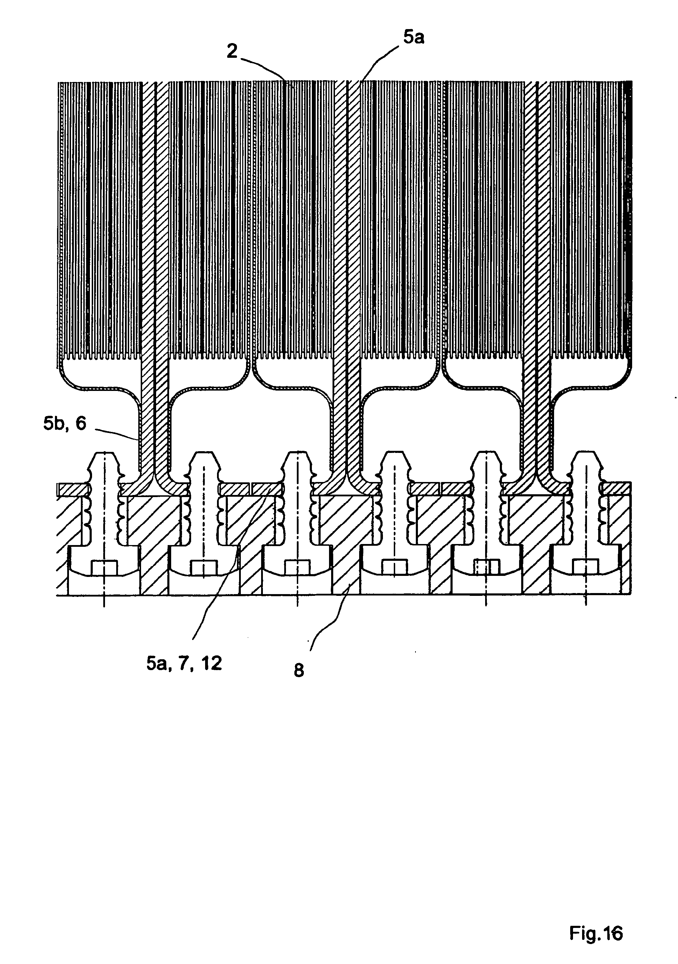

Die Figur 16 zeigt, dass die Verschraubung eines Formteils 5a der galvanischen Zelle 1 mit einem Temperierelement 8 in einem Bereich erfolgt, der räumlich von einem ersten Verbindungsbereich 6 getrennt ist. Auf diese Weise bleibt auch die gasdichte Ausbildung der Umhüllung 4 erhalten.

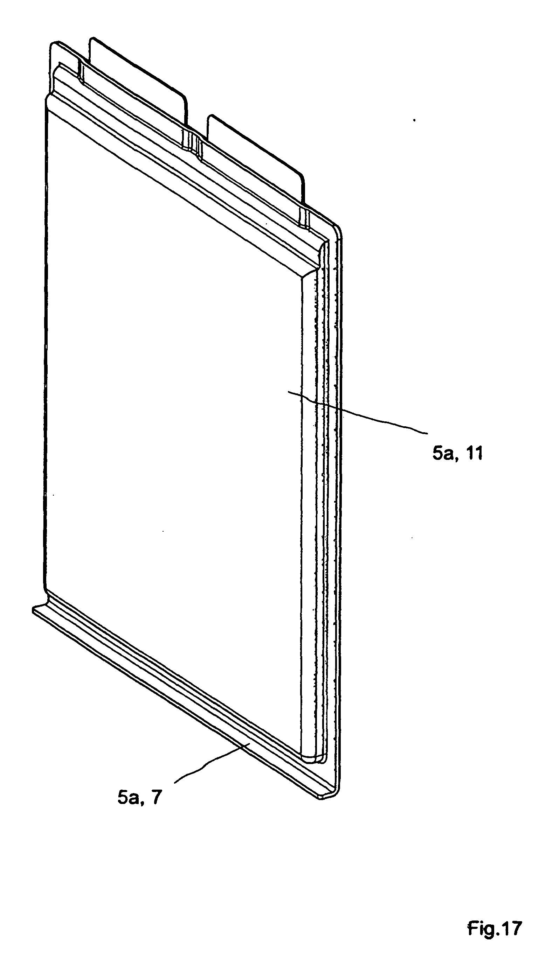

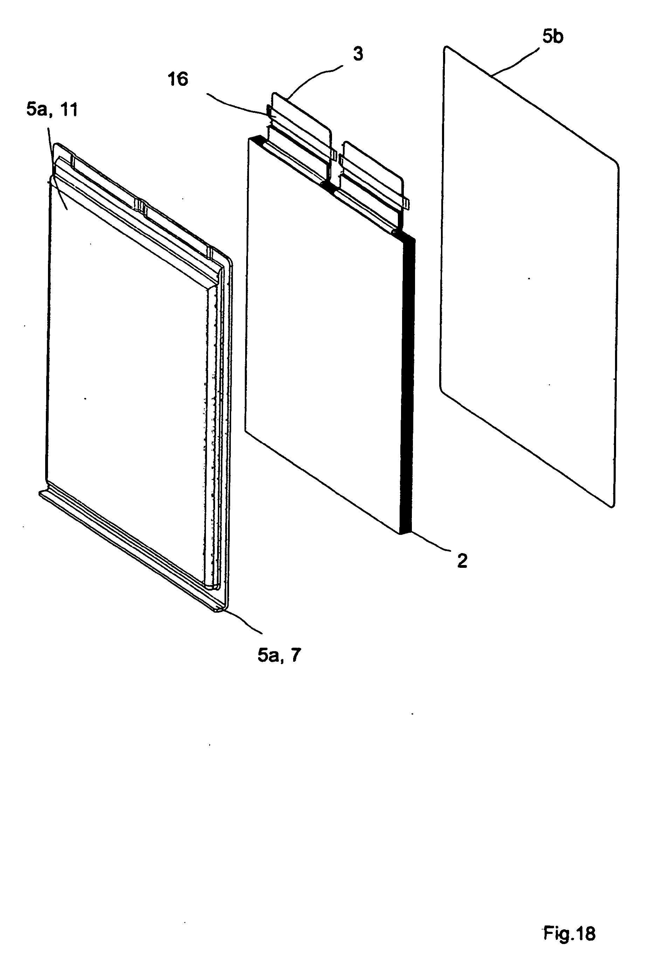

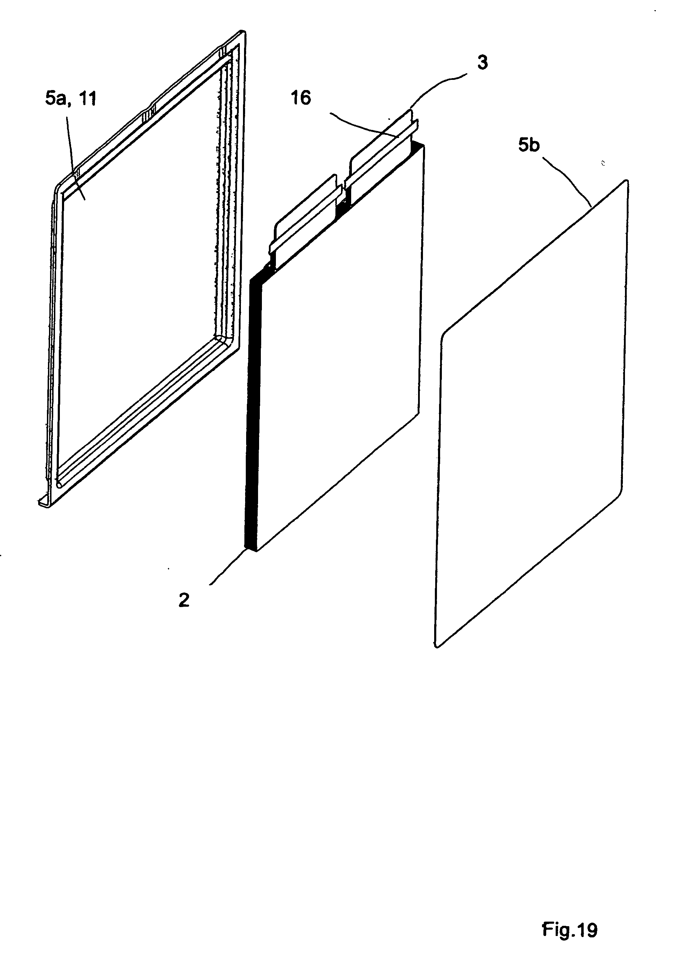

Die Figuren 17 bis 20 zeigt eine galvanische Zelle 1 mit einer mehrteiligen Umhüllung 4. Ein Formteil 5b ist als Verbundfolie ausgebildet. Ein weiteres Formteil 5a der Umhüllung 4 ist als Metallblech ausgebildet. Das Formteil 5a weist einen hochgestellten unteren Rand auf, welcher als Wärmeübergangsbereich 7 und/oder zweiter Befestigungsbereich 12 dienen kann. Weiter zeichnet sich ein Formteil 5a durch einen Bereich aus, welcher als Schale 11 ausgebildet ist. Die Schale 11 ist beispielsweise durch einen Tiefziehvorgang erzeugt und dient der Aufnahme des Elektrodenstapels 2. Nach dem Einlegen des Elektrodenstapels 2 in die Schale 11 des Formteils 5a wird die Verbundfolie 5b aufgelegt, wobei es zu einer flächigen Berührung entlang der Randbereiche der beiden Formteile 5a, 5b kommt. Nach dem stoffschlüssigen Verbinden der beiden Formteile 5a, 5b ist die Umhüllung 4 gasdicht geschlossen. Auch dargestellt sind Siegelbänder 16, welche zur Abdichtung und zur Haftverbesserung des Stoffschlusses im Bereich der Ableiter dienen. In der Schale 11 des Formteils 5a ist der Elektrodenstapel 2 der galvanischen Zelle 1 gegen mechanische Beanspruchungen geschützt.

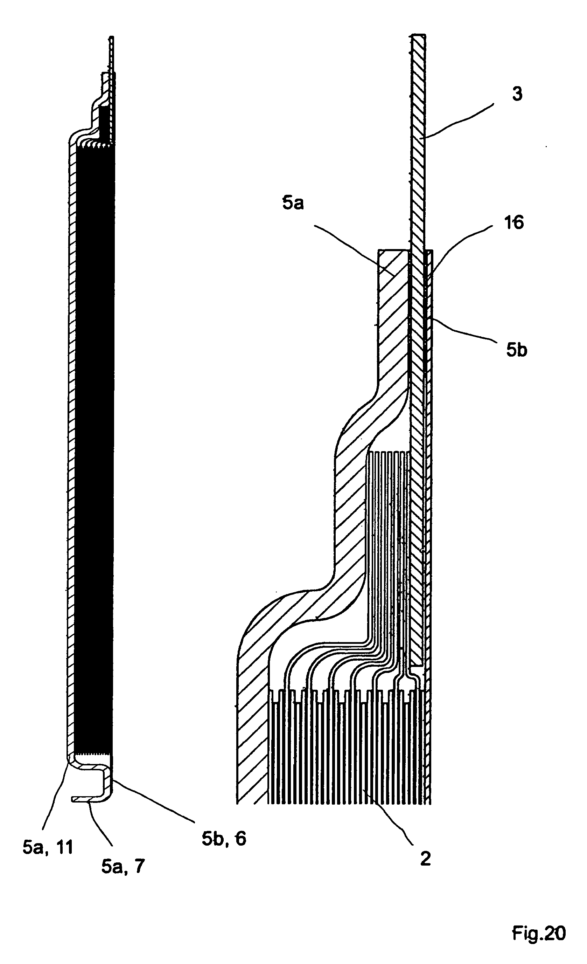

Figur 20 zeigt einen Schnitt durch eine erfindungsgemäße galvanische Zelle 1, wobei eines der Formteile 5a der Umhüllung 4 als Metallblech mit eines Ausnehmung 11 ausgebildet ist. Die Vergrößerung zeigt die Berührung von zwei Formteilen 5a, 5b, einem Stromableiter 3 und einem Siegelband 16. Weiter ist dargestellt, dass der Elektrodenstapel 2 zahlreiche Elektroden und Separatoren aufweist. Es ist auch dargestellt, dass die Elektroden gleicher Polarität über Anschlussfahnen mit dem Stromableiter 3 vorzugsweise verschweißt sind.

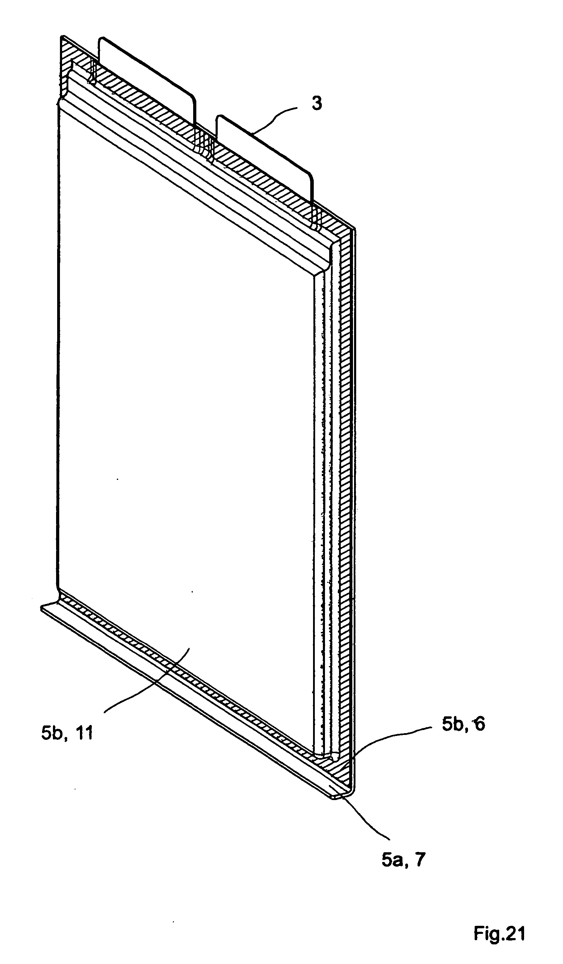

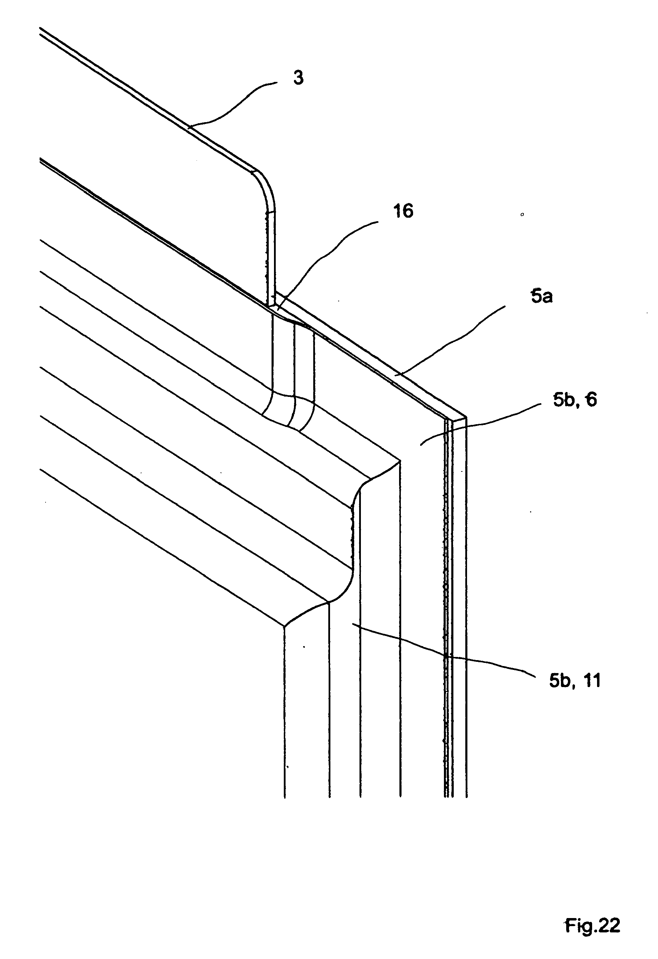

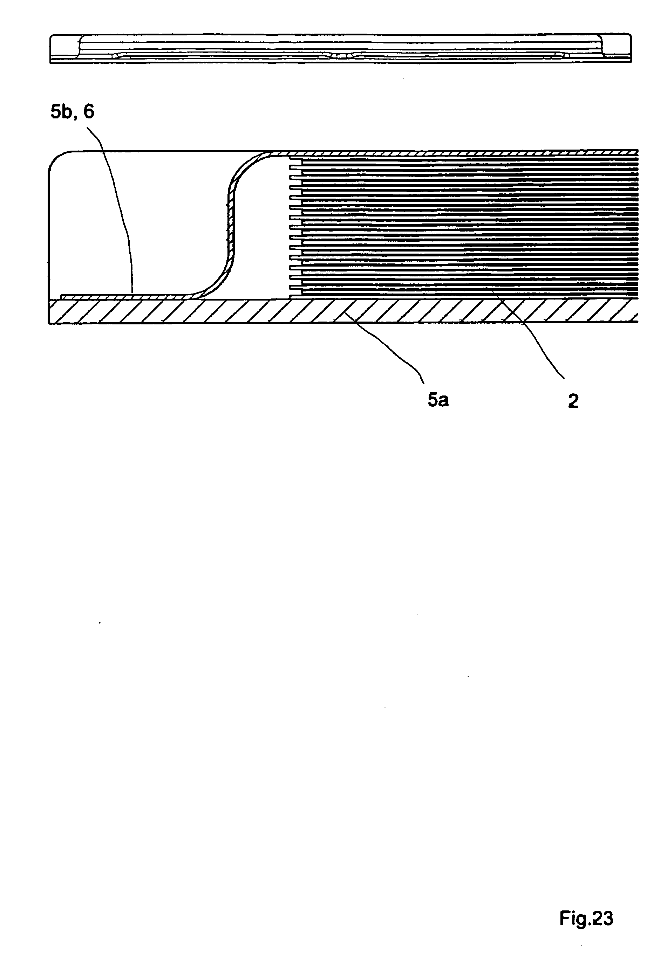

Figuren 21 bis 23 zeigen eine erfindungsgemäße galvanische Zelle 1, deren Umhüllung 4 zwei Formteile 5a, 5b aufweist. Ein Formteil 5b ist als Verbundfolie ausgebildet, ein weiteres Formteil 5a ist als Metallblech ausgebildet. Mit einer Straffur ist der Bereich der stoffschlüssigen Verbindung 6 der Formteile markiert, die sogenannte Siegelung. Das als Metallblech ausgebildete Formteil 5a liegt in unverformten Zustand vor und ist entlang seiner Randbereiche mit einem weiteren Formteil 5a insbesondere stoffschlüssig verbunden.

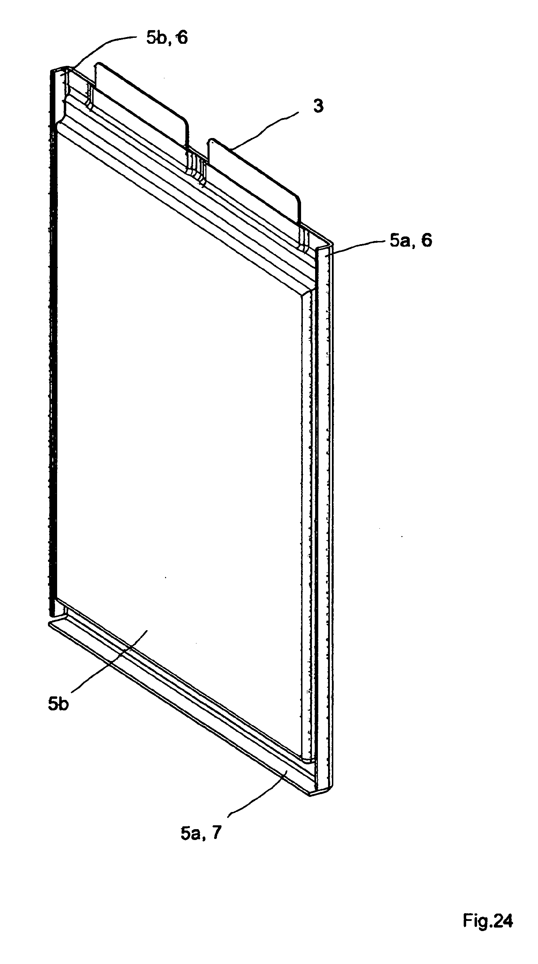

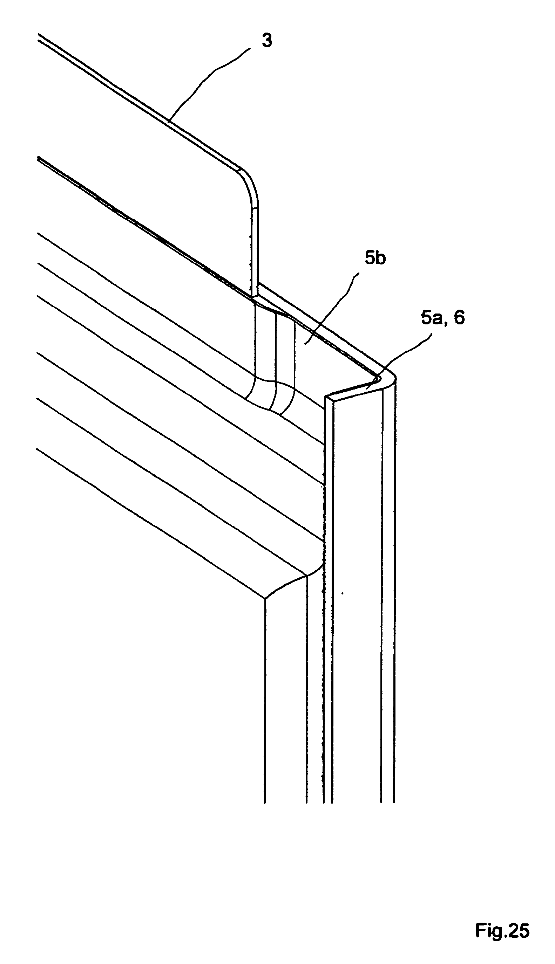

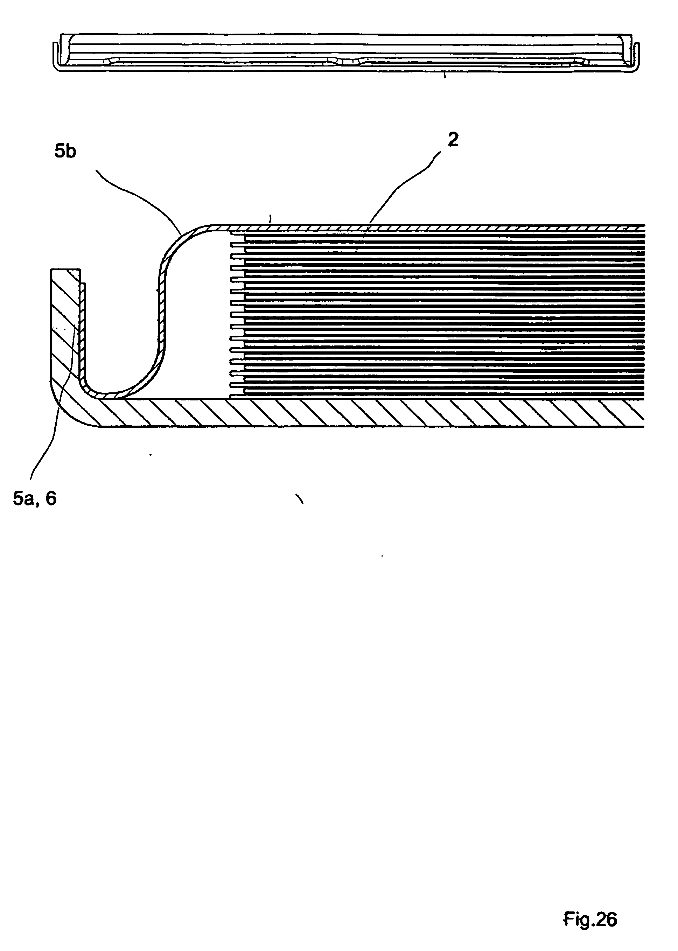

Die Figuren 24 bis 26 zeigen das als Metallblech ausgeführte Formteil 5a nach einem Biegevorgang. Bei diesem Biegevorgang ist der Bereich der stoffschlüssigen Verbindung 6 der beiden Formteile 5a, 5b gegenüber dem unverformten Zustand hochgestellt. Auf diese Weise ist die Breite des Formteils 5a gegenüber dem Ausgangszustand verringert. So wird Bauraum gespart. Weiter ist der erste Verbindungsbereich 6 zwischen den Formteilen 5a, 5b nach dem Hochstellen besonders geschützt.

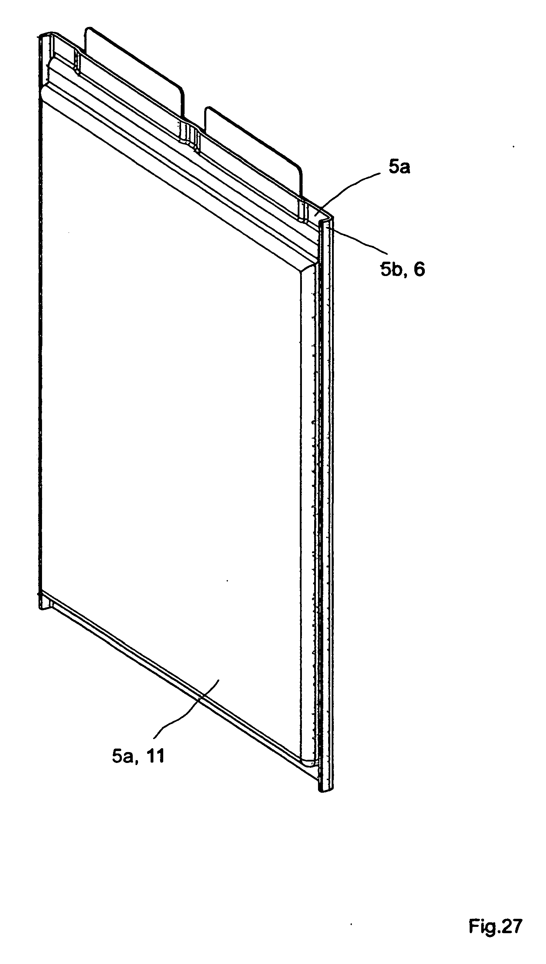

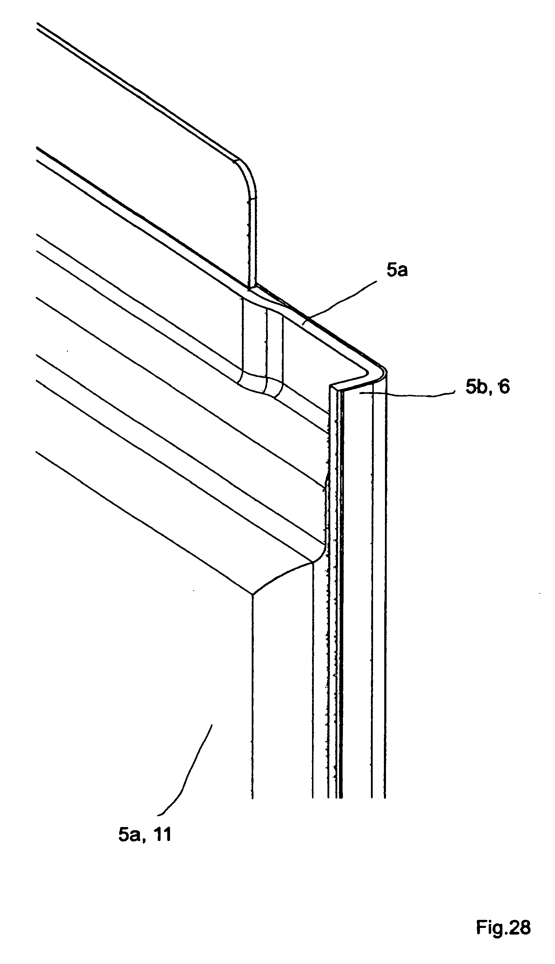

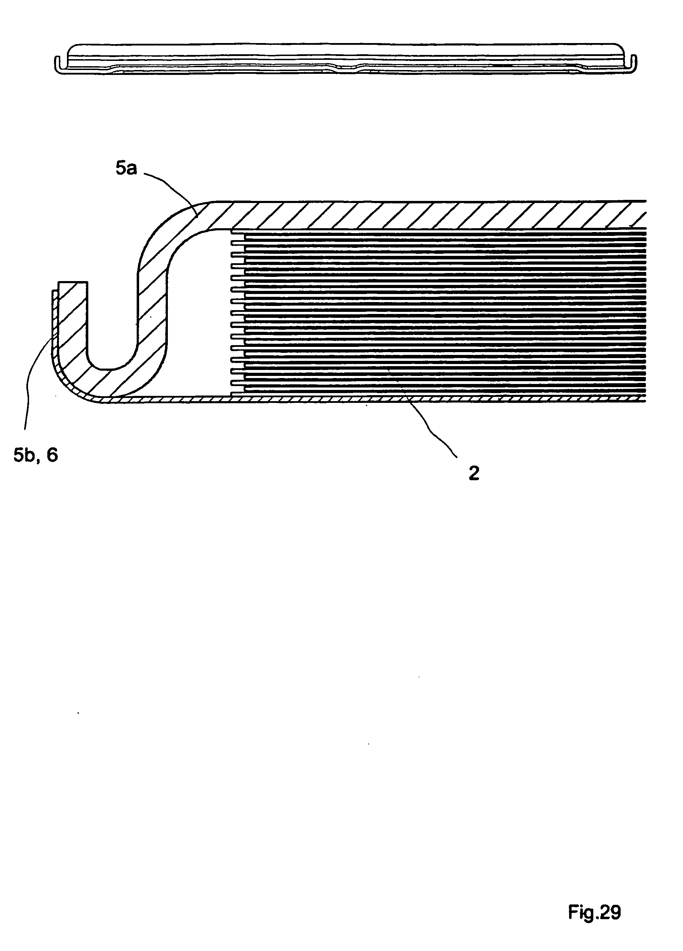

Die Figuren 27 bis 29 zeigen eine erfindungsgemäße galvanische Zelle1, wobei ein als Metallblech ausgeführtes Formteil 5a zusätzlich eine Schale 11 zur Aufnahme des Elektrodenstapels 2 aufweist. Zunächst wird die stoffschlüssige Verbindung 6 der vorhandenen Formteile 5a, 5b. Anschließend erfolgt ein Hochstellen einiger Randbereiche des als Metallblech ausgeführten Formteils 5a durch einen Biegevorgang. Hier ist auch bei geschützter Anordnung des Elektrodenstapels 2 in der Schale 11 des Formteils 5a dessen Breite gegenüber dem Ausgangszustand verringert.

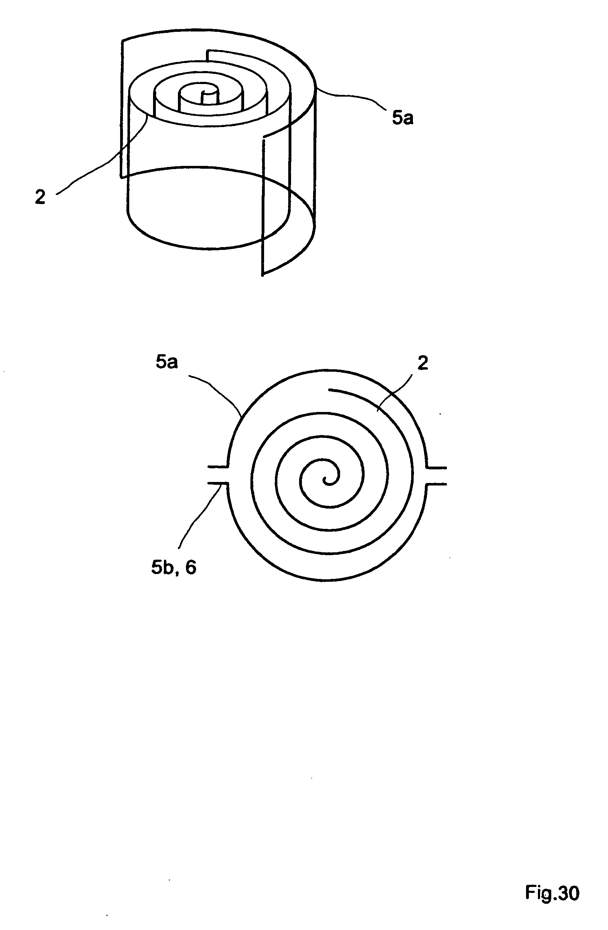

Figur 30 zeigt eine Anordnung eines Elektrodenwickel 2 in einer Umhüllung 4. Die Umhüllung 4 bzw. deren Formteil 5a, 5b sind gekrümmt und an den Radius der Elektrodenwickel 2 angepasst. Nach dem Einlegen des Elektrodenwickels 2 werden die Formteile 5a, 5b miteinander in einem ersten Verbindungsbereich verbunden.

Vorzugsweise weist wenigstens eine Elektrode der galvanischen Zelle, besonders bevorzugt wenigstens eine Kathode, eine Verbindung mit der Formel LiM-PO₄ auf, wobei M wenigstens ein Übergangsmetallkation der ersten Reihe des Periodensystems der Elemente ist. Das Übergangsmetallkation ist vorzugsweise aus der Gruppe bestehend aus Mn, Fe, Ni und Ti oder einer Kombination dieser Elemente gewählt. Die Verbindung weist vorzugsweise eine Olivinstruktur auf, vorzugsweise übergeordnetes Olivin.

In einer weiteren Ausführungsform weist vorzugsweise wenigstens eine Elektrode der galvanischen Zelle, besonders bevorzugt wenigstens eine Kathode, ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, auf.

Vorzugsweise sind die negative und die positive Elektrode einer galvanischen Zelle durch einen oder mehrere Separatoren voneinander getrennt. Solche Separatormaterialien können beispielsweise auch aus porösen anorganischen Materialien bestehen die so beschaffen sind, dass ein Stofftransport durch den Separator senkrecht zur Separatorschicht erfolgen kann, wohingegen ein Stofftransport parallel zur Separatorschicht behindert oder sogar unterdrückt wird.

Besonders bevorzugt sind dabei Separatormaterialien, die aus einem porösen anorganischen Material bestehen, das mit Partikeln durchsetzt ist oder solche Partikel wenigstens an seiner Oberfläche aufweisen, die beim Erreichen oder Überschreiten einer Temperaturschwelle schmelzen und die Poren der Separatorschicht wenigstens lokal verkleinern oder verschließen. Solche Partikel können vorzugsweise aus einem Material bestehen, das aus einer-Gruppe von Materialien ausgewählt ist, die Polymere oder Mischungen von Polymeren, Wachse oder Mischungen dieser Materialien umfasst.

Besonders bevorzugt ist eine Ausführungsform der Erfindung, bei der die Separatorschicht derart ausgestaltet ist, dass sich ihre Poren aufgrund einer Kapillarwirkung mit dem beweglichen Bestandteil füllen, der als Edukt an der chemischen Reaktion beteiligt ist, so dass sich außerhalb der Poren der Separatorschicht nur ein relativ geringer Teil der in der galvanischen Zelle vorhandenen Gesamtmenge des beweglichen Bestandteils befindet. In diesem Zusammenhang ist der in der galvanischen Zelle befindliche Elektrolyt oder einer seiner chemischen Bestandteile oder eine Mischung solcher Bestandteile ein besonders bevorzugtes Edukt, der gemäß einem besonders bevorzugten Ausführungsbeispiel der Erfindung möglichst die gesamte poröse Separatorschicht benetzt oder durchtränkt, der jedoch außerhalb der Separatorschicht nicht oder nur in vernachlässigbarer oder verhältnismäßig geringer Menge anzutreffen ist. Eine solche Anordnung kann bei der Herstellung der galvanischen Zelles dadurch erhalten werden, dass der poröse Separator mit dem in der galvanischen Zelle befindlichen Elektrolyten oder einem anderen Edukt einer geeignet gewählten chemischen Reaktion getränkt wird, so dass dieses Edukt sich anschließend weitgehend nur in dem Separator befindet.

Kommt es nun aufgrund einer chemischen Reaktion zu einer möglicherweise zunächst nur lokalen Drucksteigerung durch Bildung einer Gasblase oder durch eine lokale Erwärmung, dann kann dieses Edukt nicht aus anderen Bereichen in das Reaktionsgebiet nachfließen. Soweit oder solange es noch nachfließen kann, wird die Verfügbarkeit dieses Eduktes an anderen Stellen entsprechend vermindert. Die Reaktion kommt schließlich zum Stillstand oder bleibt wenigstens auf ein vorzugsweise kleines Gebiet begrenzt.

Erfindungsgemäß wird vorzugsweise ein Separator verwendet, welcher nicht oder nur schlecht elektronenleitend ist, und welcher aus einem zumindest teilweise stoffdurchlässigen Träger besteht. Der Träger ist vorzugsweise auf mindestens einer Seite mit einem anorganischen Material beschichtet. Als wenigstens teilweise stoffdurchlässiger Träger wird vorzugsweise ein organisches Material verwendet, welches vorzugsweise als nicht verwebtes Vlies ausgestaltet ist. Das organische Material, welches vorzugsweise ein Polymer und besonders bevorzugt ein Polyethylenterephthalat (PET) umfasst, ist mit einem anorganischen, vorzugsweise ionenleitenden Material beschichtet, welches weiter vorzugsweise in einem Temperaturbereich von - 40° C bis 200° C ionenleitend ist. Das anorganische Material umfasst bevorzugt wenigstens eine Verbindung aus der Gruppe der Oxide, Phosphate, Sulfate, Titanate, Silikate, Aluminosilikate mit wenigstens einem der Elemente Zr, Al. Li, besonders bevorzugt Zirkonoxid. Bevorzugt weist das anorganische, ionenleitende Material Partikel mit einem größten Durchmesser unter 100 nm auf.

Ein solcher Separator wird beispielsweise unter dem Handelsnamen "Separion" von der Evonik AG in Deutschland vertrieben.

## Patentansprüche

1. Galvanische Zelle (1) von insbesondere prismatischer oder zylindrischer Gestalt, welche aufweist:
einen Elektrodenstapel (2),
wenigstens einen Stromableiter (3, 3a), welcher mit dem Elektrodenstapel (2) verbunden ist,
und eine Umhüllung (4), welche den Elektrodenstapel (2) wenigstens teilweise umschließt, wobei wenigstens ein Stromableiter (3, 3a) sich teilweise aus der Umhüllung (4) erstreckt,
**dadurch gekennzeichnet,**
**dass** die Umhüllung (4) wenigstens ein erstes Formteil (5a) und ein zweites Formteil (5b) aufweist, wobei ein Formteil eine höhere Wärmeleitfähigkeit aufweist als die übrigen Formteile,
und **dass** die Formteile (5, 5a, 5b) weiter vorgesehen sind, den Elektrodenstapel (2) wenigstens teilweise zu umschließen.

2. Galvanische Zelle (1) gemäß einem der vorhergehenden Ansprüche, **dadurch gekennzeichnet, dass** wenigstens zwei Formteile (5, 5a, 5b) der Umhüllung (4) vorgesehen sind, wenigstens teilweise und insbesondere stoffschlüssig miteinander verbunden zu werden, wobei wenigstens zwei Formteile (5, 5a, 5b) der Umhüllung (4) vorgesehen sind, in einem ersten Verbindungsbereich (6) insbesondere stoffschlüssig miteinander verbunden zu werden.

3. Galvanische Zelle (1) gemäß einem der vorhergehenden Ansprüche, **dadurch gekennzeichnet, dass** wenigstens ein Formteils (5, 5a, 5b) der Umhüllung (4) einen Wärmeübergangsbereich (7) aufweist, welcher insbesondere zur Berührung mit einem Temperierelement (8) und/oder mit einem ersten Temperiermittel (14) vorgesehen ist.

4. Galvanische Zelle (1) gemäß einem der vorhergehenden Ansprüche, **dadurch gekennzeichnet, dass** wenigstens ein Formteil (5, 5a, 5b) der Umhüllung (4) biegesteif ausgeführt ist und/oder dass wenigstens ein Formteil (5, 5a, 5b) der Umhüllung (4) dünnwandig ausgeführt ist.

5. Galvanische Zelle (1) gemäß einem der vorhergehenden Ansprüche, **dadurch gekennzeichnet, dass** wenigstens ein Formteil (5, 5a, 5b) der Umhüllung (4) wenigstens bereichsweise eine Beschichtung (10) aufweist.

6. Galvanische Zelle (1) gemäß einem der vorhergehenden Ansprüche, **dadurch gekennzeichnet, dass** wenigstens ein Formteil (5, 5a, 5b) der Umhüllung (4) eine Ausnehmung (11) insbesondere zur Aufnahme des Elektrodenstapels (2) aufweist.

7. Galvanische Zelle (1) gemäß einem der vorhergehenden Ansprüche, **dadurch gekennzeichnet, dass** wenigstens ein Formteil (5, 5a, 5b) der Umhüllung (4) einen zweiten Verbindungsbereich (12) aufweist.

8. Galvanische Zelle (1) nach einem der vorstehenden Ansprüche, **dadurch gekennzeichnet, dass** sie wenigstens eine Elektrode umfasst, vorzugsweise wenigstens eine Kathode, welche eine Verbindung mit der Formel LiM-PO₄ aufweist, wobei M wenigstens ein Übergangsmetallkation der ersten Reihe des Periodensystems der Elemente ist, wobei dieses Übergangsmetallkation vorzugsweise aus der Gruppe bestehend aus Mn, Fe, Ni und Ti oder einer Kombination dieser Elemente gewählt ist, und wobei die Verbindung vorzugsweise eine Olivinstruktur aufweist, vorzugsweise übergeordnetes Olivin, wobei Fe besonders bevorzugt ist; und/oder dass sie wenigstens eine Elektrode umfasst, vorzugsweise wenigstens eine Kathode, welche ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, aufweist.

9. Galvanische Zelle (1) nach einem der vorstehenden Ansprüche, **dadurch gekennzeichnet, dass** sie wenigstens einen Separator umfasst, welcher nicht oder nur schlecht elektronenleitend ist, und welcher aus einem zumindest teilweise stoffdurchlässigen Träger besteht, wobei der Träger vorzugsweise auf mindestens einer Seite mit einem anorganischen Material beschichtet ist,
wobei als wenigstens teilweise stoffdurchlässiger Träger vorzugsweise ein organisches Material verwendet wird, welches vorzugsweise als nicht verwebtes Vlies ausgestaltet ist, wobei das organische Material vorzugsweise ein Polymer und besonders bevorzugt ein Polyethylenterephthalat (PET) umfasst,
wobei das organische Material mit einem anorganischen, vorzugsweise ionenleitenden Material beschichtet ist, welches weiter vorzugsweise in einem Temperaturbereich von - 40° C bis 200 °C ionenleitend ist, wobei das anorganische Material bevorzugt wenigstens eine Verbindung aus der Gruppe der Oxide, Phosphate, Sulfate, Titanate, Silikate, Aluminosilikate wenigstens eines der Elemente Zr, Al, Li umfasst, besonders bevorzugt Zirkonoxid, und wobei das anorganische, ionenleitende Material bevorzugt Partikel mit einem größten Durchmesser unter 100 nm aufweist.

10. Batterie mit wenigstens zwei galvanischen Zellen (1) gemäß einem der Ansprüche 1 bis 9, **dadurch gekennzeichnet,**
**dass** die galvanischen Zellen (1) im Wesentlichen parallel zueinander angeordnet sind,
und **dass** der Batterie weiter wenigstens ein Temperierelement (8) zugeordnet ist, wobei wenigstens ein Temperierelement (8) zur Berührung wenigstens eines Formteils (5, 5a, 5b) der Umhüllung (4) wenigstens einer der galvanischen Zellen (1) vorgesehen ist.

11. Batterie gemäß Anspruch 10 mit wenigstens zwei galvanischen Zellen (1) gemäß einem der Ansprüche 1 bis 9, **dadurch gekennzeichnet, dass** das wenigstens eine Temperierelement (8) wenigstens einen ersten Kanal (13) aufweist, welcher vorzugsweise mit einem zweiten Temperiermittel (14) gefüllt ist,
und/oder dass das wenigstens eine Temperierelement.(8) mit einem Wärmetauscher (15) wirkverbunden ist.

12. Verfahren zum Betrieb einer Batterie gemäß Anspruch 10 oder 11, **dadurch gekennzeichnet, dass** die Temperatur des Temperierelements (8) in Abhängigkeit von der gewünschten Betriebstemperatur der galvanischen Zellen (1) der Batterie ausgewählt wird.

13. Verfahren zum Betrieb einer Batterie gemäß Anspruch 12, **dadurch gekennzeichnet, dass** wenigstens ein erster Kanal (13) des Temperierelements (8) von dem zweiten Temperiermittel (14) durchströmt wird.

14. Verfahren zum Betrieb einer Batterie mit wenigstens zwei galvanischen Zellen (1) gemäß einem der Ansprüche 1 bis 9, **dadurch gekennzeichnet, dass** wenigstens ein Formteil (5, 5a, 5b), insbesondere ein Wärmeübergangsbereich (7) eines Formteils (5, 5a, 5b) von einem ersten Temperiermittel (14) angeströmt bzw. teilweise umströmt wird.

15. Verfahren zur Herstellung einer galvanischen Zelle (1) gemäß einem der Ansprüche 1 bis 9, **dadurch gekennzeichnet,**
**dass** zunächst wenigstens zwei Formteile (5, 5a, 5b) der Umhüllung (4) insbesondere stoffschlüssig miteinander verbunden werden und dass anschließend wenigstens ein Formteil (5, 5a, 5b) der Umhüllung (4) aus einem Ausgangszustand durch Biegen in einen verformten Zustand überführt wird, wobei wenigstens eine Ausdehnung des Formteils (5, 5a, 5b) im verformten Zustand gegenüber dem Ausgangszustand verringert ist.

## Claims

1. Galvanic cell (1), in particular of prismatic or cylindrical shape, comprising:
an electrode stack (2),
at least a conductor (3, 3a), which is connected to the electrode stack (2),
and one packaging (4), which at least partially encloses the electrode stack (2), wherein at least one conductor (3, 3a) partially protrudes through the packaging (4),
**characterized in**
**that** the packaging (4) comprises at least one first formed part (5a) and one second formed part (5b), wherein one formed part has a higher thermal conductivity than the rest of the formed parts, and
**that** the formed parts (5, 5a, 5b) are further provided to at least partially enclose the electrode stack (2).

2. Galvanic cell (1) according to any one of the preceding claims, **characterized in that** at least two formed parts (5, 5a, 5b) of the packaging (4) are provided to be at least partially connected with each other and, in particular by material engagement, wherein at least two formed parts (5, 5a, 5b) of the packaging (4) are provided to be connected with each other in a first connecting area (6), in particular by material engagement.

3. Galvanic cell (1) according to any one of the preceding claims, **characterized in that** at least one formed part (5, 5a, 5b) of the packaging (4) comprises a heat transfer area (7), which, in particular, is provided for contacting an element for temperature control (8) and/or a first means for temperature control (14).

4. Galvanic cell (1) according to any one of the preceding claims, **characterized in that** at least one formed part (5, 5a, 5b) of the packaging (4) is designed to resist bending and/or that at least one formed part (5, 5a, 5b) of the packaging (4) is realized with a thin wall.

5. Galvanic cell (1) according to any one of the preceding claims, **characterized in that** at least one formed part (5, 5a, 5b) of the packaging (4) comprises, at least partially, a coating (10).

6. Galvanic cell (1) according to any one of the preceding claims, **characterized in that** at least one formed part (5, 5a, 5b) of the packaging (4) comprises a recess (11), in particular for accommodating the electrode stack (2).

7. Galvanic cell (1) according to any one of the preceding claims, **characterized in that** at least one formed part (5, 5a, 5b) of the packaging (4) comprises a second connecting area (12).

8. Galvanic cell (1) according to any one of the preceding claims, **characterized in**
**that** said galvanic cell comprises at least an electrode, preferably at least a cathode, which comprises a compound of the formula LiMPO₄, wherein M is at least a transition metal cation of the first row of the Periodic Table of Elements, wherein said transition metal cation is, preferably, selected from the group consisting of Mn, Fe, Ni, and Ti, or a combination of these elements, and wherein said compound has, preferably, an olivine structure, preferably a super-structure parent olivine, wherein Fe is particularly preferred; and/or
**that** said galvanic cell comprises at least an electrode, preferably, at least a cathode, which comprises a lithium manganate, preferably LiMn₂O₄ of the spinel-type, a lithium cobattate, preferably LiCoO₂, or a lithium nickelate, preferably LiNiO₂, or a mixture of two or three of these oxides, or a lithium-containing mixed oxide, which contains manganese, cobalt, and nickel.

9. Galvanic cell (1) according to any one of the preceding claims, **characterized in that** said galvanic cell comprises at least a separator, which is not or only poorly conductive for electrons, and which consists of a carrier, which is at least partially permeable for substances, wherein the carrier is preferably coated with an inorganic material on at least one side,
wherein as a carrier, which is at least partially permeable for substances, preferably, an organic material is used, which, preferably, is configured as a nonwoven web, wherein the organic material, preferably, comprises a polymer and, particularly preferably, a polyethylene terephthalate (PET),
wherein the organic material is coated with an inorganic, preferably, ion-conducting material, which further preferably, is ion-conductive in a temperature range of -40°C to 200°C, wherein the inorganic material, preferably comprises, at least a compound, selected from the group consisting of oxides, phosphates, sulphates, titanates, silicates, aluminosilicates, comprising at least one of the elements Zr, Al, Li, particularly preferably, zirconium oxide, and wherein the inorganic ion-conducting material comprises preferably, particles, having a maximum diameter of less than 100 nm.

10. Battery with at least two galvanic cells (1) according to any one of the claims 1 to 9, **characterized in**
**that** the galvanic cells (1) are arranged, essentially, in parallel to each other, and
**that** at least an element for temperature control (8) is provided for the battery for contacting of at least one formed part (5, 5a, 5b) of the packaging (4) of at least one of the galvanic cells (1).

11. Battery according to claim 10 having at least two galvanic cells (1) according to any one of the claims 1 to 9, **characterized in**
**that** the at least one element for temperature control (8) comprises at least a first channel (13), which is filled, preferably, with a second means for temperature control (14), and/or
**that** the at least one element for temperature control (8) is in functional connection with a heat exchanger (15).

12. Method for operating a battery according to claims 10 or 11, **characterized in that** the temperature of the element for temperature control (8) is selected depending on the desired operating temperature of the galvanic cell (1) of the battery.

13. Method for operating a battery according to claim 12, **characterized in that** at least a first channel (13) of the element for temperature control (8) is exposed to the flow of a second means for temperature control (14).

14. Method for operating a battery with at least two galvanic cells (1) according to any one of the claims 1 to 9, **characterized in that** at least one formed part (5, 5a, 5b), in particular a heat transfer area (7) of a formed part (5, 5a, 5b), is exposed to the flow or, respectively, exposed to the partial flow of a first means for temperature control (14).

15. Method for the manufacture of a galvanic cell (1) according to any one of the claims 1 to 9, **characterized in**
**that**, initially, at least two formed parts (5, 5a, 5b) of the packaging (4) are connected with each other, in particular, by material engagement, and
**that**, subsequently, at least one formed part (5, 5a, 5b) of the packaging (4) is transferred, by means of bending, from an initial state into a deformed state, wherein at least one dimension of the formed part (5, 5a, 5b) is decreased in the deformed state compared to the initial state.

## Revendications

1. Cellule galvanique (1) ayant en particulier une forme prismatique ou cylindrique, laquelle comporte :
un empilement d'électrodes (2),
au moins un dérivateur de courant (3, 3a), qui est relié à l'empilement d'électrodes (2),
et une chemise (4) qui entoure au moins partiellement l'empilement d'électrodes (2), sachant qu'au moins un dérivateur de courant (3, 3a) s'étend en partie hors de la chemise (4),
**caractérisée**
**en ce que** la chemise (4) comporte au moins une première partie profilée (5a) et une deuxième partie profilée (5b), une partie profilée ayant une conductibilité thermique plus élevée que les autres parties profilées,
et **en ce que** les parties profilées (5, 5a, 5b) sont prévues en outre pour entourer au moins partiellement l'empilement d'électrodes (2).

2. Cellule galvanique (1) selon l'une des revendications précédentes, **caractérisée en ce qu'**au moins deux parties profilées (5, 5a, 5b) de la chemise (4) sont prévues pour être reliées entre elles au moins partiellement et en particulier par adhérence de matière, sachant qu'au moins deux parties profilées (5, 5a, 5b) de la chemise (4) sont prévues pour être assemblées entre elles, en particulier par adhérence de matière, dans une première zone d'assemblage (6).

3. Cellule galvanique (1) selon l'une quelconque des revendications précédentes, **caractérisée en ce qu'**au moins une partie profilée (5, 5a, 5b) de la chemise (4) comporte une zone de transfert thermique (7), qui est prévue, en particulier, pour entrer en contact avec un élément de régulation thermique (8) et/ou avec un premier agent de régulation thermique (14).

4. Cellule galvanique (1) selon l'une quelconque des revendications précédentes, **caractérisée en ce qu'**au moins une partie profilée (5, 5a, 5b) de la chemise (4) est conçue de manière résistante à la flexion et/ou **en ce qu'**au moins une partie profilée (5, 5a, 5b) de la chemise (4) est réalisée avec une paroi mince.

5. Cellule galvanique (1) selon l'une quelconque des revendications précédentes, **caractérisée en ce qu'**au moins une partie profilée (5, 5a, 5b) de la chemise (4) comporte, au moins par zones, un revêtement (10).

6. Cellule galvanique (1) selon l'une quelconque des revendications précédentes, **caractérisée en ce qu'**au moins une partie profilée (5, 5a, 5b) de la chemise (4) comporte un évidement (11) destiné, en particulier, à recevoir l'empilement d'électrodes (2).

7. Cellule galvanique (1) selon l'une quelconque des revendications précédentes, **caractérisée en ce qu'**au moins une partie profilée (5, 5a, 5b) de la chemise (4) comporte une deuxième zone d'assemblage (12).

8. Cellule galvanique (1) selon l'une quelconque des revendications précédentes, **caractérisée en ce qu'**elle comporte au moins une électrode, de préférence au moins une cathode, qui comporte une liaison avec la formule LiM-PO₄, dans laquelle M est au moins un cation métallique de transfert de la première ligne de la classification périodique des éléments, ledit cation métallique de transfert étant choisi de préférence dans le groupe constitué du Mn, Fe, Ni et Ti ou dans une combinaison de ces éléments, et la liaison comportant de préférence une structure olivine, de préférence une olivine supérieure, Fe étant particulièrement préféré ; et/ou en ce qu'elle comporte au moins une électrode, de préférence au moins une cathode, qui comporte un manganate de lithium, de préférence LiMn₂O₄ du type spinelle, un cobaltate de lithium, de préférence LiCoO₂, ou un nickelate de lithium, de préférence LiNiO₂, ou un mélange de deux ou trois de ces oxydes, ou un oxyde mixte de lithium, qui contient du manganèse, du cobalt et du nickel.

9. Cellule galvanique (1) selon l'une quelconque des revendications précédentes, **caractérisée en ce qu'**elle comporte au moins un séparateur, qui n'est pas conducteur d'électrons ou seulement mauvais conducteur d'électrons, et qui est formé par un support au moins partiellement perméable à la matière, ledit support étant revêtu d'un matériau anorganique, de préférence sur au moins une face,
sachant que pour le support au moins partiellement perméable à la matière, on utilise de préférence un matériau organique, qui est réalisé de préférence sous la forme d'un non-tissé, le matériau organique comprenant de préférence un polymère et, encore mieux, un polyéthylènetéréphtalate (PET),
sachant que le matériau organique est revêtu d'un matériau anorganique, de préférence conducteur d'ions, lequel, encore mieux, est conducteur d'ions dans une plage de températures de -40°C à 200°C, le matériau anorganique comprenant de préférence au moins une liaison issue du groupe des oxydes, phosphates, sulfates, titanates, silicates, aluminosilicates, au moins un des éléments Zr, Al, Li, encore mieux de l'oxyde de zirconium, et sachant que le matériau anorganique conducteur d'ions comporte de préférence des particules dont le plus grand diamètre est inférieur à 100 nm.

10. Batterie comportant au moins deux cellules galvaniques (1) selon l'une des revendications 1 à 9, **caractérisée**
**en ce que** les cellules galvaniques (1) sont disposées sensiblement parallèlement entre elles,
et **en ce que**, en outre, au moins un élément de régulation de la température (8) est associé à la batterie, au moins un élément de régulation de la température (8) étant prévu pour entrer en contact avec au moins une partie profilée (5, 5a, 5b) de la chemise (4) d'au moins une des cellules galvaniques (1).

11. Batterie selon la revendication 10, comportant au moins deux cellules galvaniques (1) selon l'une des revendications 1 à 9, **caractérisée en ce que** ledit au moins un élément de régulation de la température (8) comporte au moins un premier conduit (13) qui, de préférence, est rempli avec un deuxième agent de régulation de la température (14),
et/ou **en ce que** ledit au moins un élément de régulation de la température (8) est en liaison active avec un échangeur de chaleur (15).

12. Procédé pour le fonctionnement d'une batterie selon la revendication 10 ou 11, **caractérisé en ce que** la température de l'élément de régulation de la température (8) est choisie en fonction de la température de service souhaitée des cellules galvaniques (1) de la batterie.

13. Procédé pour le fonctionnement d'une batterie selon la revendication 12, **caractérisé en ce qu'**au moins un premier conduit (13) de l'élément de régulation de la température (8) est parcouru par le deuxième agent de régulation de la température (14).

14. Procédé pour le fonctionnement d'une batterie comportant au moins deux cellules galvaniques (1) selon l'une des revendications 1 à 9, **caractérisé en ce qu'**au moins une partie profilée (5, 5a, 5b), en particulier une zone de transfert thermique d'une partie profilée (5, 5a, 5b), est parcourue par un premier agent de régulation de la température (14) ou est contournée partiellement par celui-ci.

15. Procédé pour la réalisation d'une cellule galvanique (1) selon l'une des revendications 1 à 9, **caractérisé en ce que**
tout d'abord, au moins deux parties profilées (5, 5a, 5b) de la chemise (4) sont assemblées l'une à l'autre, en particulier par adhérence de matière,
et **en ce que**, ensuite, au moins une partie profilée (5, 5a, 5b) de la chemise (4) est amenée à partir d'un état initial par flexion dans un état déformé, sachant qu'au moins une dimension de la partie profilée (5, 5a, 5b) à l'état déformé est diminuée par rapport à celle à l'état initial.
